(19) **Europäisches Patentamt / European Patent Office / Office européen des brevets**

(11) **EP 2 947 812 B1**

(12) **EUROPEAN PATENT SPECIFICATION**

(45) Date of publication and mention
of the grant of the patent:
**14.03.2018 Bulletin 2018/11**

(21) Application number: **14740768.8**

(22) Date of filing: **16.01.2014**

(51) Int Cl.:
*H04L 9/08* (2006.01)      *H04L 9/32* (2006.01)

(86) International application number:
**PCT/JP2014/050652**

(87) International publication number:
**WO 2014/112551 (24.07.2014 Gazette 2014/30)**

(54) **SEGMENTED SECRET-KEY STORAGE SYSTEM, SEGMENT STORAGE APPARATUS SEGMENTED SECRET-KEY STORAGE METHOD**

SYSTEM ZUR SEGMENTIERTEN SPEICHERUNG GEHEIMER SCHLÜSSEL, SEGMENTSPEICHERUNGEINRICHTUNG, UND SPEICHERVERFAHREN FÜR SEGMENTIERTE GEHEIMSCHLÜSSEL

SYSTÈME DE STOCKAGE SEGMENTÉE DE CLÉS SECRÈTES, APPAREIL DE STOCKAGE DE SEGMENT ET PROCÉDÉ DE STOCKAGE DE CLÉ SECRETE SEGMENTÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2013 JP 2013006648**

(43) Date of publication of application:
**25.11.2015 Bulletin 2015/48**

(73) Proprietor: **Nippon Telegraph and Telephone Corporation**
**Tokyo 100-8116 (JP)**

(72) Inventors:
• **KOBAYASHI, Tetsutaro**
**Musashino-shi**
**Tokyo 180-8585 (JP)**
• **YAMAMOTO, Go**
**Musashino-shi**
**Tokyo 180-8585 (JP)**
• **YOSHIDA, Reo**
**Musashino-shi**
**Tokyo 180-8585 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**JP-A- 2001 166 687**    **JP-A- 2001 189 719**
**JP-A- 2002 091 301**    **JP-A- 2004 048 479**
**JP-A- 2006 352 254**    **US-A1- 2012 163 590**

**EP 2 947 812 B1**

**Description**

TECHNICAL FIELD

The present invention relates to a segmented secret-key storage system, a segment storage apparatus, and a segmented secret-key storage method for securely storing a secret key for use in encryption or authentication.

BACKGROUND ART

Storing a secret key for use in encryption or authentication is an important matter. In modem encryption, preventing secret key leaks is a prerequisite to security. Tamper-resistant hardware for storing keys has been studied to prevent secret keys from leaking, and products such as a trusted platform module (TPM) and a hardware security module (HSM) have been put to practical use.

Another method of preventing secret information from being divulged because of leakage of a secret key is to update the secret key. That type of technique has already been known, as disclosed in Patent literature 1.

Patent literature 2 discloses a cryptography module. The cryptography module includes a key store having a plurality of storage locations for storing a key as k key fragments including a plurality of random key fragments and a remainder key fragment. One or more crypto-processing segments each operate based on corresponding ones of the k key fragments to process an input signal to produce an output signal.

Further reference is made to Patent literatures 3 to 6.

PRIOR ART LITERATURE

PATENT LITERATURE

Patent literature 1: Japanese Patent Application Laid Open No. 2012-150287

Patent literature 2: US Patent Application Laid Open No. 2012/163590

Patent literature 3: Japanese Patent Application Laid Open No. 2004-048479

Patent literature 4: Japanese Patent Application Laid Open No. 2001-166687

Patent literature 5: Japanese Patent Application Laid Open No. 2006-352254

Patent literature 6: Japanese Patent Application Laid Open No. 2002-091301

SUMMARY OF THE INVENTION

PROBLEMS TO BE SOLVED BY THE INVENTION

Hardware such as a TPM and an HSM is, however, slow and often does not have sufficient capacity to store a large number of keys. The method of updating secret keys periodically or under a predetermined condition has the risk of leaking secret information from when a secret key has leaked until when that secret key is updated.

In view of these problems, it is an object of the present invention to reduce the risk of leaking secret information caused by leakage of a secret key.

The present invention provides segment storage apparatus and segmented secret-key storage methods having the features of the respective independent claims.

A first segmented secret-key storage system according to an aspect includes an encryption apparatus which uses a public key PK to encrypt plaintext M and outputs ciphertext C; N segment storage apparatuses which record one of secret-key segments $sk_1$, ..., $sk_N$ obtained by segmenting a secret key SK corresponding to the public key PK; and a combining device which obtains the plaintext M corresponding to the ciphertext C. It is first assumed that the relationship

$$\mathrm{Dec}(C, SK) = \mathrm{Dec}(C, g(sk_1, \ldots, sk_N))$$

$$= f(\mathrm{Dec}(C, sk_1), \ldots, \mathrm{Dec}(C, sk_N))$$

is satisfied, where N is an integer not less than 2, n is an integer between 1 and N, both inclusive, $\mathrm{Dec}(C, SK)$ is a symbol representing decryption of the ciphertext C with the secret key SK, $g(sk_1, \ldots, sk_N)$ is a function of $sk_1, \ldots, sk_N$, and $f(m_1, \ldots, m_N)$ is a function of $m_1, \ldots, m_N$. In the first segmented secret-key storage system, each of the segment storage apparatuses includes a decryption unit and a secret-key segment changing unit. The decryption unit uses the secret-key segment $sk_n$ recorded in the segment storage apparatus to obtain a plaintext segment $m_n$ given by $m_n = \mathrm{Dec}(C, sk_n)$ and sends the plaintext segment $m_n$ to the combining device. The secret-key segment changing unit obtains a set of secret-key segments $(sk_1', \ldots, sk_N')$ which satisfies

$$\mathrm{Dec}(C, SK) = \mathrm{Dec}(C, g(sk_1', \ldots, sk_N'))$$

$$= f(\mathrm{Dec}(C, sk_1'), \ldots, \mathrm{Dec}(C, sk_N'))$$

and which differs from $(sk_1, \ldots, sk_N)$ and changes the secret-key segment $sk_n$ recorded in the segment storage apparatus to $sk_n'$. The combining device obtains the plaintext M given by $M = f(m_1, \ldots, m_N)$.

A second segmented secret-key storage system according to an aspect includes an encryption apparatus which uses a public key PK to encrypt plaintext M and outputs ciphertext C, and N segment storage apparatuses which record one of secret-key segments $sk_1, \ldots, sk_N$ obtained by segmenting a secret key SK corresponding to the public key PK. It is first assumed that the relationships

$$\mathrm{Dec}(C, SK) = \mathrm{Dec}(C, g(sk_1, \ldots, sk_N))$$

$$m_N = \mathrm{Dec}(C, sk_N)$$

$$m_n = f(\mathrm{Dec}(C, sk_n), m_{n+1})$$

$$M = m_1$$

are satisfied, where N is an integer not less than 2, n is an integer between 1 and N, both inclusive, $\mathrm{Dec}(C, SK)$ is a symbol representing decryption of the ciphertext C with the secret key SK, $g(sk_1, \ldots, sk_N)$ is a function of $sk_1, \ldots, sk_N$, and $f(\mathrm{Dec}(C, sk_n), m_{n+1})$ is a function of $\mathrm{Dec}(C, sk_n)$ and $m_{n+1}$. The segment storage apparatus which records the secret-key segment $sk_N$ includes a decryption unit which uses the secret-key segment $sk_N$ to obtain a plaintext segment $m_N$ given by $m_N = \mathrm{Dec}(C, sk_N)$ and sends the plaintext segment $m_N$ to the segment storage apparatus which records the secret-key segment $sk_{N-1}$. The segment storage apparatus which records the secret-key segment $sk_n$ (N is not less than 3, and n is 2 to N - 1) includes a decryption unit which uses a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(\mathrm{Dec}(C, sk_n), m_{n+1})$ and sends the plaintext segment $m_n$ to the segment storage apparatus which records the secret-key segment $sk_{n-1}$. The segment storage apparatus which records the secret-key segment $sk_1$ includes a decryption unit which uses a plaintext segment $m_2$ obtained from the segment storage apparatus which records the secret-key segment $sk_2$ and the secret-key segment $sk_1$ to obtain the plaintext M given by $M = f(\mathrm{Dec}(C, sk_1), m_2)$. Each of the segment storage apparatuses further includes a secret-key segment changing unit which obtains a set of secret-key segments $(sk_1', \ldots, sk_N')$ which satisfies

$$\mathrm{Dec}(C, SK) = \mathrm{Dec}(C, g(sk_1', \ldots, sk_N'))$$

$$m_N = \mathrm{Dec}(C, sk_N')$$

$$m_n = f(Dec(C, sk_n'), m_{n+1})$$

$$M = m_1$$

and which differs from $(sk_1, ..., sk_N)$ and changes the secret-key segment $sk_n$ recorded in the segment storage apparatus to $sk_n'$.

A third segmented secret-key storage system according to an aspect includes N segment storage apparatuses which record one of secret-key segments $sk_1, ..., sk_N$ obtained by segmenting a secret key SK, and a combining device which obtains a signature $\Sigma$ for plaintext M. It is first assumed that the relationship

$$Sig(M, SK) = Sig(M, g(sk_1, ..., sk_N))$$

$$= f(Sig(M, sk_1), ..., Sig(C, sk_N))$$

is satisfied, where N is an integer not less than 2, n is an integer between 1 and N, both inclusive, $Sig(M, SK)$ is a symbol representing generation of the signature $\Sigma$ with the secret key SK, $g(sk_1, ..., sk_N)$ is a function of $sk_1, ..., sk_N$, and $f(\sigma_1, ..., \sigma_N)$ is a function of $\sigma_1, ..., \sigma_N$. Each of the segment storage apparatuses includes a generation unit and a secret-key segment changing unit. The generation unit uses the secret-key segment $sk_n$ recorded in the segment storage apparatus to obtain a signature segment $\sigma_n$ given by $\sigma_n = Sig(M, sk_n)$ and sends the signature segment $\sigma_n$ to the combining device. The secret-key segment changing unit obtains a set of secret-key segments $(sk_1', ..., sk_N')$ which satisfies

$$Sig(M, SK) = Sig(M, g(sk_1', ..., sk_N'))$$

$$= f(Sig(M, sk_1'), ..., Sig(C, sk_N'))$$

and which differs from $(sk_1, ..., sk_N)$ and changes the secret-key segment $sk_n$ recorded in the segment storage apparatus to $sk_n'$. The combining device obtains the signature $\Sigma$ given by $\Sigma = f(\sigma_1, ..., \sigma_N)$.

A fourth segmented secret-key storage system according to an aspect includes N segment storage apparatuses which record one of secret-key segments $sk_1, ..., sk_N$ obtained by segmenting a secret key SK, and generates a signature for plaintext M. It is first assumed that the relationships

$$Sig(M, SK) = Sig(M, g(sk_1, ..., sk_N))$$

$$\sigma_N = Sig(M, sk_N)$$

$$\sigma_n = f(Sig(M, sk_n), \sigma_{n+1})$$

$$\Sigma = \sigma_1$$

are satisfied, where N is an integer not less than 2, n is an integer between 1 and N, both inclusive, $Sig(M, SK)$ is a symbol representing generation of a signature $\Sigma$ with the secret key SK, $g(sk_1, ..., sk_N)$ is a function of $sk_1, ..., sk_N$, and $f(Sig(M, sk_n), \sigma_{n+1})$ is a function of $Sig(M, sk_n)$ and $\sigma_{n+1}$. The segment storage apparatus which records the secret-key segment $sk_N$ includes a generation unit which uses the secret-key segment $sk_N$ to obtain a signature segment $\sigma_N$ given by $\sigma_N = Sig(M, sk_N)$ and sends the signature segment $\sigma_N$ to the segment storage apparatus which records the secret-key segment $sk_{n-1}$. The segment storage apparatus which records the secret-key segment $sk_n$ (N is not less than 3 and n is 2 to N - 1) includes a generation unit which uses a signature segment $\sigma_{n+1}$ obtained from the segment storage apparatus which records the secret-key segment $sk_{n+1}$ and the secret-key segment $sk_n$ to obtain a signature segment

$\sigma_n$ given by $\sigma_n$ = f(Sig(M, sk$_n$), $\sigma_{n+1}$) and sends the signature segment $\sigma_n$ to the segment storage apparatus which records the secret-key segment sk$_{n-1}$. The segment storage apparatus which records the secret-key segment sk$_1$ includes a generation unit which uses a signature segment $\sigma_2$ obtained from the segment storage apparatus which records the secret-key segment sk$_2$ and the secret-key segment sk$_1$ to obtain the signature $\Sigma$ given by $\Sigma$ = f(Sig(M, sk$_1$), $\sigma_2$). Each of the segment storage apparatuses further includes a secret-key segment changing unit which obtains a set of secret-key segments (sk$_1$', ..., sk$_N$') that satisfies

$$\mathrm{Sig}(M, SK) = \mathrm{Sig}(M, g(sk_1', \ldots, sk_N'))$$

$$\sigma_N = \mathrm{Sig}(M, sk_N')$$

$$\sigma_n = f(\mathrm{Sig}(M, sk_n'), \sigma_{n+1})$$

$$\Sigma = \sigma_1$$

and that differs from (sk$_1$, ..., sk$_N$) and changes the secret-key segment sk$_n$ recorded in the segment storage apparatus to sk$_n$'.

EFFECTS OF THE INVENTION

According to a segmented secret-key storage system of the present invention, the secret key SK will not be revealed unless the secret-key segments are stolen from all the segment storage apparatuses in an interval between changes made to the secret-key segments. Accordingly, the risk of leakage can be greatly reduced in comparison with the risk of leakage of the secret key from a single apparatus.

BRIEF DESCRIPTION OF THE DRAWINGS

Fig. 1 is a view showing an example of the functional configuration of a segmented secret-key storage system according to a first embodiment.
Fig. 2 is a view showing a processing flow of decrypting ciphertext to plaintext in the segmented secret-key storage system in the first embodiment.
Fig. 3 is a view showing a first example of a processing flow of changing secret-key segments in the present invention.
Fig. 4 is a view showing a second example of a processing flow of changing secret-key segments in the present invention.
Fig. 5 is a view showing a third example of a processing flow of changing secret-key segments in the present invention.
Fig. 6 is a view showing an example of the functional configuration of a segmented secret-key storage system according to a second embodiment.
Fig. 7 is a view showing a processing flow of decrypting ciphertext to plaintext in the segmented secret-key storage system in the second embodiment.
Fig. 8 is a view showing an example of the functional configuration of a segmented secret-key storage system according to a third aspect.
Fig. 9 is a view showing a processing flow of generating a signature in the segmented secret-key storage system in the third aspect.
Fig. 10 is a view showing an example of the functional configuration of a segmented secret-key storage system according to a fourth aspect.
Fig. 11 is a view showing a processing flow of generating a signature in the segmented secret-key storage system in the fourth aspect.

DETAILED DESCRIPTION OF THE EMBODIMENTS

Now, embodiments of the present invention will be described in detail. Components having identical functions will be denoted by the same reference numbers, and a duplicate description of those components will be avoided.

First Embodiment

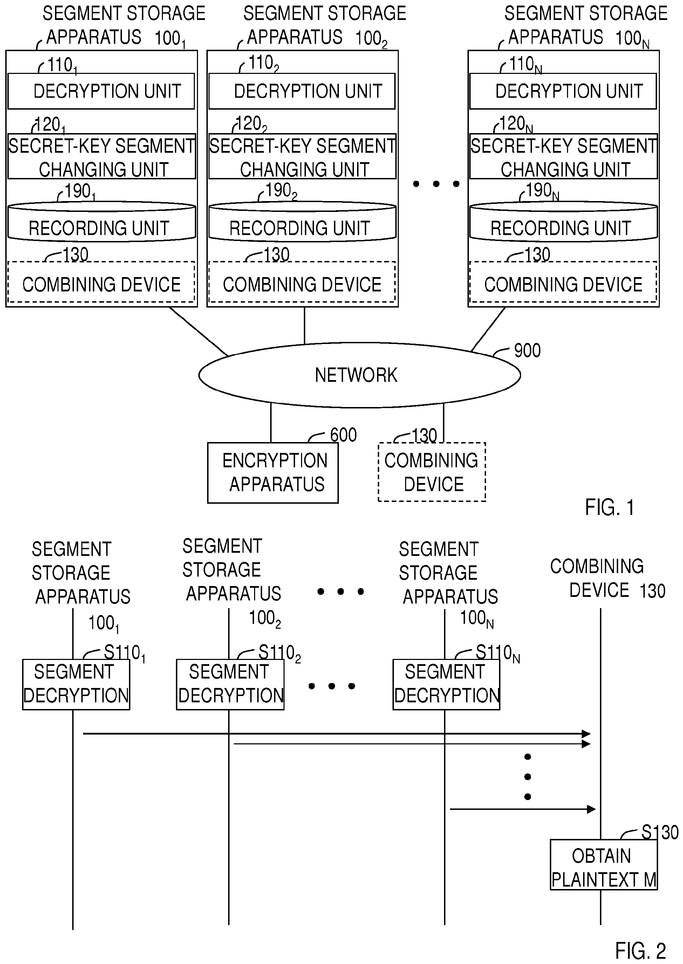

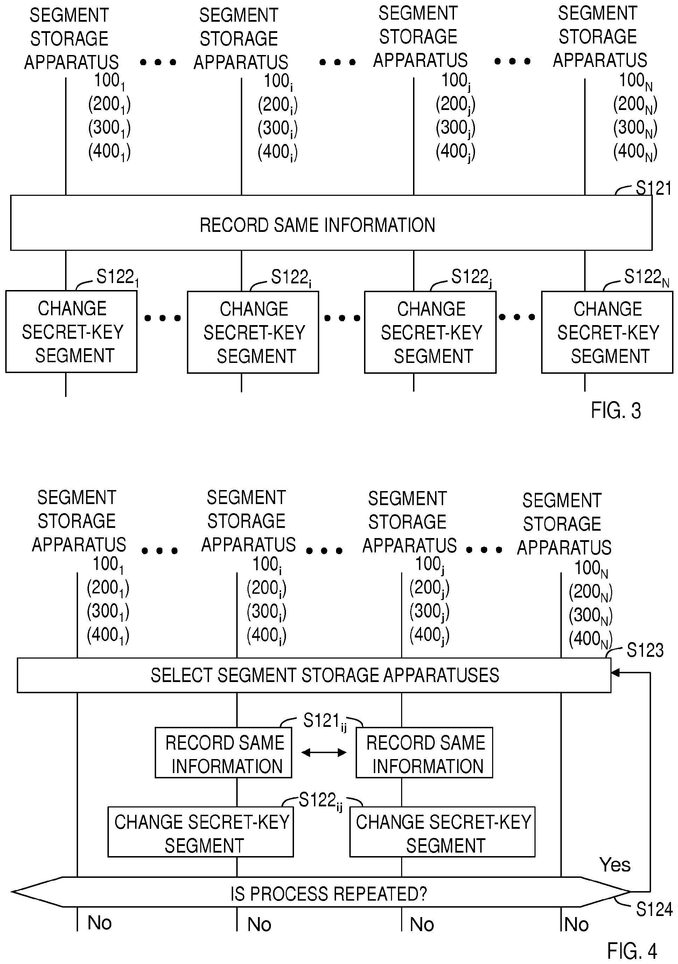

Fig. 1 shows an example of the functional configuration of a segmented secret-key storage system in a first embodiment. Fig. 2 shows a processing flow of decrypting ciphertext to plaintext, and Figs. 3 to 5 show examples of a processing flow of changing secret-key segments. The segmented secret-key storage system in the first embodiment includes an encryption apparatus 600, N segment storage apparatuses $100_1$, ..., $100_N$, and a combining device 130, which are connected by a network 900. The encryption apparatus 600 uses a public key PK to encrypt plaintext M and outputs ciphertext C. The segment storage apparatus $100_n$ records a secret-key segment $sk_n$ among secret-key segments $sk_1$, ..., $sk_N$ obtained by segmenting a secret key SK corresponding to the public key PK. The combining device 130 obtains plaintext M corresponding to the ciphertext C. In Fig. 1, the combining device 130 is represented by a dotted box and is shown in different places. The combining device 130 may be a single independent apparatus or may be disposed in any segment storage apparatus $100_n$. A plurality of apparatuses may include the combining device 130, and the combining device 130 to be used may be selected in each decryption processing flow.
Suppose here that the relationship

$$Dec(C, SK) = Dec(C, g(sk_1, ..., sk_N))$$

$$= f(Dec(C, sk_1), ..., Dec(C, sk_N))$$

holds, where N is an integer not less than 2, n is an integer between 1 and N, both inclusive, Dec(C, SK) is a symbol representing decryption of the ciphertext C with the secret key SK, $g(sk_1, ..., sk_N)$ is a function of $sk_1$, ..., $sk_N$, $f(m_1, ..., m_N)$ is a function of $m_1$, ..., $m_N$, and ^ is a symbol representing a power.
Each segment storage apparatus $100_n$ includes a decryption unit $110_n$, a secret-key segment changing unit $120_n$, and a recording unit $190_n$. The recording unit $190_n$ records the secret-key segment $sk_n$. The decryption unit $110_n$ uses the secret-key segment $sk_n$ to obtain a plaintext segment $m_n$ given by $m_n = Dec(C, sk_n)$ and sends the plaintext segment $m_n$ to the combining device 130 ($S110_n$). The combining device 130 obtains the plaintext M given by M = $f(m_1, ..., m_N)$ (S130).
The secret-key segment changing unit $120_n$ obtains, periodically or under a predetermined condition, a set of secret-key segments $(sk_1', ..., sk_N')$ which satisfies

$$Dec(C, SK) = Dec(C, g(sk_1', ..., sk_N'))$$

$$= f(Dec(C, sk_1'), ..., Dec(C, sk_N'))$$

and which differs from $(sk_1, ..., sk_N)$, and updates the secret-key segment $sk_n$ recorded in the recording unit $190_n$ to $sk_n'$ ($S120_n$). The predetermined condition can be when decryption has been carried out a given number of times, for example, and can be specified as desired. For example, if functions g and f are defined to satisfy

$$Dec(C, SK) = Dec(C, g(sk_1', ..., sk_N'))$$

$$= f(Dec(C, sk_1'), ..., Dec(C, sk_N'))$$

when the relationship

$$SK = sk_1 + ... + sk_N$$

holds, the secret-key segment changing unit $120_n$ should obtain a set of secret-key segments $(sk_1', ..., sk_N')$ that satisfies

$$sk_1' + ... + sk_N' = sk_1 + ... + sk_N$$

Alternatively, if functions g and f are defined to satisfy

$$Dec(C, SK) = Dec(C, g(sk_1', \ldots, sk_N'))$$

$$= f(Dec(C, sk_1'), \ldots, Dec(C, sk_N'))$$

when the relationship

$$SK = sk_1 + \ldots + sk_N \mod q$$

holds, the secret-key segment changing unit $120_n$ should obtain a set of secret-key segments $(sk_1', \ldots, sk_N')$ that satisfies

$$sk_1' + \ldots + sk_N' \mod q = sk_1 + \ldots + sk_N \mod q$$

In the processing flow of changing the secret-key segments as shown in Fig. 3, $\alpha_n$ is a change part to be applied to the secret-key segment in the segment storage apparatus $100_n$, and the segment storage apparatuses $100_1$ to $100_N$ obtain $\alpha_1$ to $\alpha_N$ that satisfy

$$\alpha_1 + \ldots + \alpha_N = 0$$

or

$$\alpha_1 + \ldots + \alpha_N \mod q = 0$$

and the segment storage apparatus $100_n$ obtains $\alpha_n$ (S121). Then, the secret-key segment changing unit $120_n$ changes the secret-key segment according to

$$sk_n' = sk_n + \alpha_n$$

(S122$_n$).

In the processing flow of changing the secret-key segments shown in Fig. 4, two segment storage apparatuses $100_i$ and $100_j$ are selected, where i and j are integers between 1 and N, both inclusive, and $i \neq j$. When N = 2, i = 1 and j = 2, or i = 2 and j = 1. The segment storage apparatuses $100_i$ and $100_j$ record the same change part $\alpha$ (S121$_{ij}$). The secret-key segment changing unit $120_i$ of the segment storage apparatus $100_i$ changes the secret-key segment according to

$$sk_i' = sk_i + \alpha$$

and the secret-key segment changing unit $120_j$ of the segment storage apparatus $100_j$ changes the secret-key segment according to

$$sk_j' = sk_j - \alpha$$

(S122$_{ij}$). It is checked whether all the segment storage apparatuses have been selected, and it is determined whether to repeat the steps (S124). Through the repetition of the steps, all the secret-key segments are changed. In this way of recording the same value $\alpha$ in two segment storage apparatuses and using $\alpha$ to change the secret-key segments $sk_i$ and $sk_j$ to $sk_i'$ and $sk_j'$, respectively, an authentication key exchange protocol can be used in the step of recording the same value $\alpha$ (S121$_{ij}$). With the authentication key exchange protocol, $\alpha$ is defined by using random numbers generated by both the segment storage apparatus $100_i$ and the segment storage apparatus $100_j$, and neither segment storage

apparatus can define $\alpha$ arbitrarily. Consequently, security can be improved.

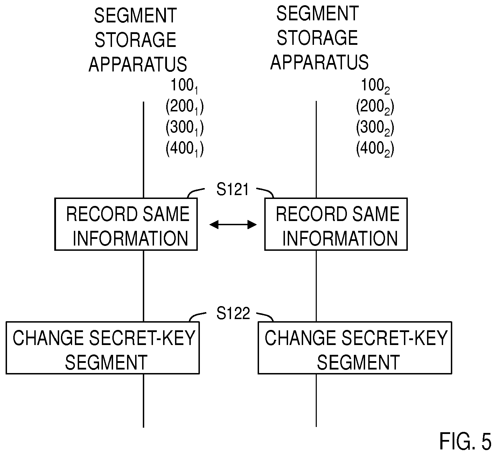

The processing flow of changing the secret-key segments shown in Fig. 5 is the processing flow in the case where N = 2. In that case, there is no need to select the segment storage apparatuses, and the segment storage apparatuses $100_1$ and $100_2$ record the same change part $\alpha$ (S121). The secret-key segment changing unit $120_1$ of the segment storage apparatus $100_1$ changes the secret-key segment according to

$$sk_1' = sk_1 + \alpha$$

and the secret-key segment changing unit $120_2$ of the segment storage apparatus $100_2$ changes the secret-key segment according to

$$sk_2' = sk_2 - \alpha$$

(S122). Here, in the step of recording the same value $\alpha$ (S121), the authentication key exchange protocol can be used.

According to the segmented secret-key storage system in the first embodiment, the secret key SK is not revealed unless the secret-key segments are stolen from all the segment storage apparatuses in an interval between changes made to the secret-key segments. Accordingly, the risk of leakage can be greatly reduced in comparison with the risk of leakage of the secret key from a single apparatus.

An existing single decryption apparatus that records the secret key SK can migrate to the segment storage apparatus $100_N$ in the first embodiment through the following procedure: Add the secret-key segment changing unit $120_N$ to the existing decryption apparatus; and connect the segment storage apparatuses $100_1$ to $100_{N-1}$ in which the recording units $190_1$ to $190_{N-1}$ record $sk_1 = ... = sk_{N-1} = 0$, to the network 900. This configuration sets the initial state to $sk_n = SK$ and $sk_1 = ... = sk_{N-1} = 0$. Then, when the secret key is segmented by changing the first set of secret-key segments ($sk_1$, ..., $sk_N$), the segmented secret-key storage system in the first embodiment can be configured. It is thus easy to migrate to the segmented secret-key storage system in the first embodiment from the existing system.

Examples of applicable encryption methods

When the segmented secret-key storage system in the first embodiment is implemented, the relationship

$$Dec(C, SK) = Dec(C, g(sk_1, ..., sk_N))$$

$$= f(Dec(C, sk_1), ..., Dec(C, sk_N))$$

must hold. Encryption methods that satisfy the relationship will be indicated below. Other encryption methods are also applicable so long as the relationship is satisfied.

(1) RSA encryption

In RSA encryption, plaintext M and ciphertext C satisfy the relationships

$$C = M^e \mod q$$

$$M = Dec(C, d) = C^d \mod q$$

where q is the composite (product) of two large prime numbers, {q, e} is the public key PK, and d is the secret key SK. If functions g and f are defined as

$$g(sk_1, ..., sk_N) = sk_1 + ... + sk_N$$

$$f(\mathrm{Dec}(C, sk_1), \ldots, \mathrm{Dec}(C, sk_N))$$

$$= \mathrm{Dec}(C, sk_1) \times \ldots \times \mathrm{Dec}(C, sk_N) \quad \mathrm{mod}\ q$$

and if a set of secret-key segments ($sk_1$, ..., $sk_N$) is selected to satisfy

$$d = SK = sk_1 + \ldots + sk_N$$

then

$$f(\mathrm{Dec}(C, sk_1), \ldots, \mathrm{Dec}(C, sk_N))$$

$$= C^{\wedge}(sk_1 + \ldots + sk_N) \quad \mathrm{mod}\ q$$

$$= M$$

because

$$\mathrm{Dec}\,(C, sk_n) = C^{\wedge}\,sk_n \quad \mathrm{mod}\ q$$

Therefore,

$$\mathrm{Dec}(C, SK) = \mathrm{Dec}(C, g(sk_1, \ldots, sk_N))$$

$$= f(\mathrm{Dec}(C, sk_1), \ldots, \mathrm{Dec}(C, sk_N))$$

holds.

(2) ElGamal encryption

In ElGamal encryption, when the public key PK is {g, h}, the secret key SK is x, and r is a random number (h = g ^ x; x and r are integers between 0 and q - 1, both inclusive; q is the order of a cyclic group G; g is the generator of the cyclic group G), plaintext M and ciphertext C, which are elements of the cyclic group G, satisfy these relationships

$$C = \{C_1, C_2\} = \{g^{\wedge}r, Mh^{\wedge}r\}$$

$$M = \mathrm{Dec}(C, x) = C_2/(C_1^{\wedge}x)$$

If functions g and f are defined as

$$g(sk_1, \ldots, sk_N) = sk_1 + \ldots + sk_N \quad \mathrm{mod}\ q$$

$$f(\mathrm{Dec}(C, sk_1), \ldots, \mathrm{Dec}(C, sk_N))$$

$$= \mathrm{Dec}(C, sk_1) \times \ldots \times \mathrm{Dec}(C, sk_N)/(C_2^{\wedge}(N-1))$$

and if a set of secret-key segments ($sk_1$, ..., $sk_N$) is selected to satisfy

$$x = SK = sk_1 + \ldots + sk_N \quad \text{mod } q$$

then

$$f(Dec(C, sk_1), \ldots, Dec(C, sk_N))$$

$$= C_2/(C_1 {}^{\wedge} sk_1) \times \ldots \times C_2/(C_1 {}^{\wedge} sk_N)/(C_2 {}^{\wedge}(N\text{-}1))$$

$$= C_2/(C_1 {}^{\wedge}(sk_1 + \ldots + sk_N))$$

$$= M$$

because

$$Dec(C, sk_n) = C_2/( C_1 {}^{\wedge} sk_n)$$

Therefore,

$$Dec(C, SK) = Dec(C, g(sk_1, \ldots, sk_N))$$

$$= f(Dec(C, sk_1), \ldots, Dec(C, sk_N))$$

holds.

(3) Elliptic curve ElGamal encryption

In elliptic curve ElGamal encryption, when the public key PK is {G, H}, the secret key SK is x, and r is a random number (H = xG; x is an integer between 1 and q - 1, both inclusive; r is an integer between 0 and q - 1, both inclusive, q is the order of a base point G on the elliptic curve), plaintext M and ciphertext C satisfy these relationships

$$C = \{C_1, C_2\} = \{rG, M+rH\}$$

$$M = Dec(C, x) = C_2 - xC_1$$

If functions g and f are defined as

$$g(sk_1, \ldots, sk_N) = sk_1 + \ldots + sk_N \quad \text{mod } q$$

$$f(Dec(C, sk_1), \ldots, Dec(C, sk_N))$$

$$= Dec(C, sk_1) + \ldots + Dec(C, sk_N) - (N\text{-}1)C_2$$

and if a set of secret-key segments $(sk_1, \ldots, sk_N)$ is selected to satisfy

$$x = SK = sk_1 + \ldots + sk_N \quad \text{mod } q$$

then

$$f(Dec(C, sk_1), \ldots, Dec(C, sk_N))$$

$$= C_2 - sk_1 C_1 + \ldots + C_2 - sk_N C_1 - (N-1)C_2$$

$$= C_2 - (sk_1 + \ldots + sk_N)C_1$$

$$= M$$

because

$$Dec(C, sk_n) = C_2 - sk_n C_1$$

Therefore,

$$Dec(C, SK) = Dec(C, g(sk_1, \ldots, sk_N))$$

$$= f(Dec(C, sk_1), \ldots, Dec(C, sk_N))$$

holds.

(4) ID-based encryption

In ID-based encryption, when the public key PK is $\{P_{ID}, P, Q\}$, the secret key SK is $S_{ID}$, and r is a random number ($S_{ID} = sP_{ID}$; $Q = sP$; $P_{ID}$ is a point on an elliptic curve of order q transformed from ID by using a hash function; P is the generator of a subgroup on the elliptic curve; s is the master secret key; e( , ) represents pairing on the elliptic curve), plaintext M and ciphertext C satisfy the relationships

$$C = \{C_1, C_2\} = \{rP, M \times e(P_{ID}, rQ)\}$$

$$M = Dec(C, S_{ID}) = C_2 \times e(S_{ID}, C_1)^{-1}$$

If functions g and f are defined as

$$g(sk_1, \ldots, sk_N) = sk_1 + \ldots + sk_N \quad \bmod q$$

$$f(Dec(C, sk_1), \ldots, Dec(C, sk_N))$$

$$= Dec(C, sk_1) \times \ldots \times Dec(C, sk_N)/(C_2^{\wedge}(N-1))$$

and if a set of secret-key segments ($sk_1, \ldots, sk_N$) is selected to satisfy

$$S_{ID} = SK = sk_1 + \ldots + sk_N \quad \bmod q$$

then

$$f(Dec(C, sk_1), ..., Dec(C, sk_N))$$

$$= C_2 \times e(sk_1, C_1)^{-1} \times ... \times C_2 \times e(sk_N, C_1)^{-1} / (C_2{}^{\wedge}(N-1))$$

$$= C_2 \times e(sk_1 + ... + sk_N, C_1)^{-1}$$

$$= M$$

because

$$Dec(C, sk_n) = C_2 \times e(sk_n, C_1)^{-1}$$

Therefore,

$$Dec(C, SK) = Dec(C, g(sk_1, ..., sk_N))$$

$$= f(Dec(C, sk_1), ..., Dec(C, sk_N))$$

holds.

Second Embodiment

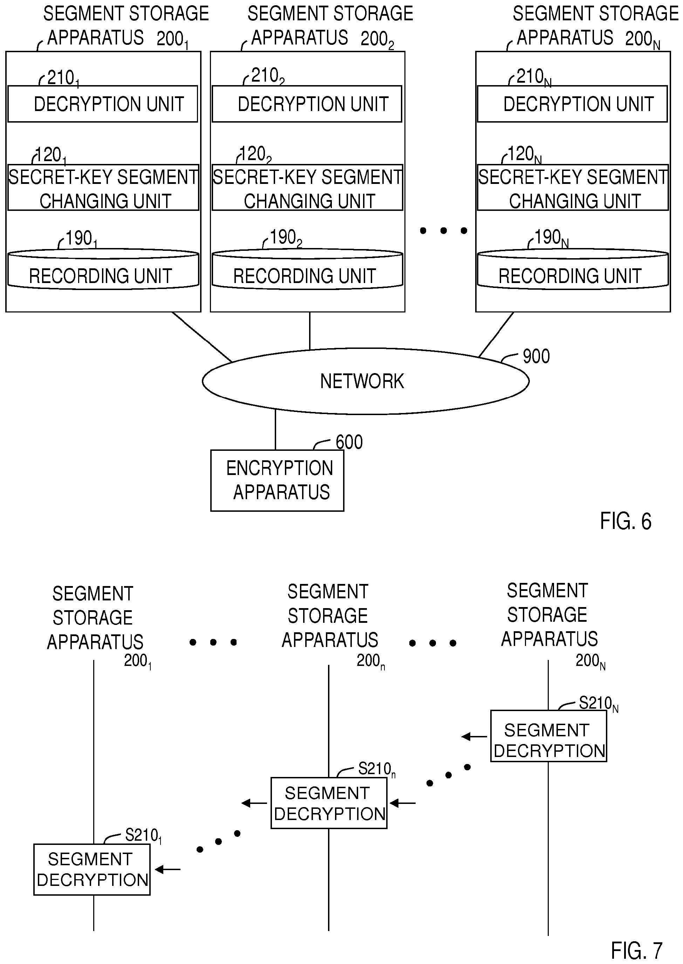

Fig. 6 shows an example of the functional configuration of a segmented secret-key storage system in a second embodiment, and Fig. 7 shows a processing flow of decrypting ciphertext to plaintext. Examples of a processing flow of changing secret-key segments are as shown in Figs. 3 to 5. The segmented secret-key storage system in the second embodiment includes an encryption apparatus 600 and N segment storage apparatuses $200_1$, .., $200_N$, which are connected by a network 900. The encryption apparatus 600 uses a public key PK to encrypt plaintext M and outputs ciphertext C. The segment storage apparatus $200_n$ records a secret-key segment $sk_n$ among secret-key segments $sk_1$, ... , $sk_N$ obtained by segmenting a secret key SK corresponding to the public key PK.

Suppose here that the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

hold, where N is an integer not less than 2, n is an integer between 1 and N, both inclusive, Dec(C, SK) is a symbol representing decryption of ciphertext C with the secret key SK, $g(sk_1, ..., sk_N)$ is a function of $sk_1$, ..., $sk_N$, $f(Dec(C, sk_n), m_{n+1})$ is a function of $Dec(C, sk_n)$ and $m_{n+1}$, and $\wedge$ is a symbol representing a power.

Each segment storage apparatus $200_n$ includes a decryption unit $210_n$, a secret-key segment changing unit $120_n$, and a recording unit $190_n$. The recording unit $190_n$ records the secret-key segment $sk_n$. The decryption unit $210_N$ of the segment storage apparatus $200_N$ uses the secret-key segment $sk_N$ to obtain a plaintext segment $m_N$ given by $m_N = Dec(C, sk_N)$ and sends the plaintext segment $m_N$ to the segment storage apparatus $200_{N-1}$ (S210$_N$).

The decryption unit $210_n$ of the segment storage apparatus $200_n$ (n = 2, ..., N-1) uses the plaintext segment $m_{n+1}$ obtained from the segment storage apparatus $200_{n+1}$ and the secret-key segment $sk_n$ to obtain a plaintext segment $m_n$ as $m_n = f(Dec(C, sk_n), m_{n+1})$, and sends the plaintext segment $m_n$ to the segment storage apparatus $200_{n-1}$ (S210$_n$).

However, when N = 2, the segment storage apparatus $200_n$ (n = 2, ..., N-1) is not present.

The decryption unit $210_1$ of the segment storage apparatus $200_1$ uses the plaintext segment $m_2$ obtained from the segment storage apparatus $200_2$ and the secret-key segment $sk_1$ to obtain plaintext M given by M = $f(Dec(C, sk_1), m_2)$ (S210$_1$).

The secret-key segment changing unit $120_n$ obtains, periodically or under a predetermined condition, a set of secret-key segments $(sk_1', ..., sk_N')$ which satisfies the relationships

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and which differs from $(sk_1, ..., sk_N)$, and updates the secret-key segment $sk_n$ recorded in the recording unit $190_n$ to $sk_n'$ (S120$_n$). For example, if functions g and f are defined to satisfy

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

when the relationship

$$SK = sk_1 + ... + sk_N$$

holds, a set of secret-key segments $(sk_1', ..., sk_N')$ that satisfies

$$sk_1' + ... + sk_N' = sk_1 + ... + sk_N$$

should be obtained. Alternatively, if functions g and f are defined to satisfy

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

when the relationship

$$SK = sk_1 + \ldots + sk_N \quad \mathrm{mod}\ q$$

holds, a set of secret-key segments ($sk_1'$, ..., $sk_N'$) that satisfies

$$sk_1' + \ldots + sk_N' \quad \mathrm{mod}\ q = sk_1 + \ldots + sk_N \quad \mathrm{mod}\ q$$

should be obtained. In those examples, the requirements of the set of segments ($sk_1'$, ..., $sk_N'$) are the same as those in the first embodiment, and the flow of changing the set of segments ($sk_1'$, ..., $sk_N'$) is the same as in the first embodiment (Figs. 3 to 5).

According to the segmented secret-key storage system in the second embodiment, the secret key SK is not revealed unless the secret-key segments are stolen from all the segment storage apparatuses in an interval between changes made to the secret-key segments. Accordingly, the risk of leakage can be greatly reduced in comparison with the risk of leakage of the secret key from a single apparatus.

An existing single decryption apparatus that records the secret key SK can migrate to the segment storage apparatus $200_N$ in the second embodiment through the following procedure: Add the secret-key segment changing unit $120_N$ to the existing decryption apparatus; and connect the segment storage apparatuses $200_1$ to $200_{N-1}$ in which the recording units $190_1$ to $190_{N-1}$ record $sk_1 = ... = sk_{N-1} = 0$, to the network 900. This configuration sets the initial state to $sk_N = SK$ and $sk_1 = ... = sk_{N-1} = 0$. Then, when the secret key is segmented by changing the first set of secret-key segments ($sk_1$, ..., $sk_N$), the segmented secret-key storage system in the second embodiment can be configured. It is thus easy to migrate to the segmented secret-key storage system in the second embodiment from the existing system.

Examples of applicable encryption methods

When the segmented secret-key storage system in the second embodiment is implemented, the relationships

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

must hold. Encryption methods that satisfy the relationships will be indicated below. Other encryption methods are also applicable so long as the relationships are satisfied.

(1) RSA encryption

In RSA encryption, plaintext M and ciphertext C satisfy the relationships

$$C = M^e \quad \mathrm{mod}\ q$$

$$M = Dec\ (C, d) = C^d \quad \mathrm{mod}\ q$$

where q is the composite (product) of two large prime numbers, {q, e} is the public key, and d is the secret key SK. If functions g and f are defined as

$$g(sk_1, \ldots, sk_N) = sk_1 + \ldots + sk_N$$

$$f(Dec(C, sk_n), m_{n+1})$$

$$= Dec(C, sk_n) \times m_{n+1} \mod q$$

and if a set of secret-key segments $(sk_1, \ldots, sk_N)$ is selected to satisfy

$$d = SK = sk_1 + \ldots + sk_N$$

then

$$m_{N-1} = f(Dec(C, sk_{N-1}), m_N)$$

$$= C^{\wedge}(sk_{N-1} + sk_N) \mod q$$

because

$$m_N = Dec(C, sk_N) = C^{\wedge}sk_N \mod q$$

This is repeated to provide

$$m_n = f(Dec(C, sk_n), m_{n+1})$$

$$= C^{\wedge}(sk_n + \ldots + sk_N) \mod q$$

and then

$$m_1 = C^{\wedge}(sk_1 + \ldots + sk_N) \mod q$$

$$= M$$

Therefore,

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

hold.

(2) ElGamal encryption

In ElGamal encryption, when the public key PK is {g, h}, the secret key SK is x, and r is a random number (h = g ^ x; x and r are integers between 0 and q - 1, both inclusive; q is the order of a cyclic group G; g is the generator of the cyclic group G), plaintext M and ciphertext C, which are elements of the cyclic group G, satisfy these relationships

$$C = \{C_1, C_2\} = \{g^\wedge r, Mh^\wedge r\}$$

$$M = Dec(C, x) = C_2/(C_1^\wedge x)$$

If functions g and f are defined as

$$g(sk_1, ..., sk_N) = sk_1 + ... + sk_N \quad \bmod q$$

$$f(Dec(C, sk_n), m_{n+1})$$

$$= (Dec(C, sk_n) \times m_{n+1})/C_2$$

and if a set of secret-key segments $(sk_1, ..., sk_N)$ is selected to satisfy

$$x = SK = sk_1 + ... + sk_N \quad \bmod q$$

then

$$m_{N-1} = f(Dec(C, sk_{N-1}), m_N)$$

$$= (Dec(C, sk_{N-1}) \times m_N)/C_2$$

$$= (C_2/(C_1^\wedge sk_{N-1}) \times C_2/(C_1^\wedge sk_N))/C_2$$

$$= C_2/((C_1^\wedge sk_{N-1})(C_1^\wedge sk_N))$$

$$= C_2/(C_1^\wedge (sk_{N-1} + sk_N))$$

because

$$m_N = Dec(C, sk_N) = C_2/(C_1^\wedge sk_N) \quad \bmod q$$

This is repeated to provide

$$m_n = f(Dec(C, sk_n), m_{n+1})$$

$$= C_2/(C_1^\wedge (sk_n + ... + sk_N))$$

and then

$$m_1 = C_2/(C_1{}^{\wedge} (sk_1 + \ldots + sk_N))$$

$$= M$$

Therefore,

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

hold.

(3) Elliptic curve ElGamal encryption

In elliptic curve ElGamal encryption, when the public key PK is {G, H}, the secret key SK is x, and r is a random number (H = xG; x is an integer between 1 and q - 1, both inclusive; r is an integer between 0 and q - 1, both inclusive, q is the order of a base point G on the elliptic curve), plaintext M and ciphertext C satisfy these relationships

$$C = \{C_1, C_2\} = \{rG, M+rH\}$$

$$M = Dec(C, x) = C_2 - xC_1$$

If functions g and f are defined as

$$g(sk_1, \ldots, sk_N) = sk_1 + \ldots + sk_N \quad \bmod q$$

$$f(Dec(C, sk_n), m_{n+1})$$

$$= Dec(C, sk_n) + m_{n+1} - C_2$$

and if a set of secret-key segments $(sk_1, \ldots, sk_N)$ is selected to satisfy

$$x = SK = sk_1 + \ldots + sk_N \quad \bmod q$$

then

$$m_{N-1} = f(Dec(C, sk_{N-1}), m_N)$$

$$= Dec(C, sk_{N-1}) + m_N - C_2$$

$$= C_2 - sk_{N-1}C_1 + C_2 - sk_NC_1 - C_2$$

$$= C_2 - sk_{N-1}C_1 - sk_NC_1$$

$$= C_2 - (sk_{N-1} + sk_N)C_1$$

because

$$m_N = Dec(C, sk_N) = C_2 - sk_NC_1$$

This is repeated to provide

$$m_n = f(Dec(C, sk_n), m_{n+1})$$

$$= C_2 - (sk_n + \ldots + sk_N)C_1$$

and then

$$m_1 = C_2 - (sk_1 + \ldots + sk_N)C_1$$

$$= M$$

Therefore,

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

hold.

(4) ID-based encryption

In ID-based encryption, when the public key PK is $\{P_{ID}, P, Q\}$, the secret key SK is $S_{ID}$, and r is a random number ($S_{ID} = sP_{ID}$; $Q = sP$; $P_{ID}$ is a point on an elliptic curve of order q transformed from ID by using a hash function; P is the generator of a subgroup on the elliptic curve; s is the master secret key; e( , ) represents pairing on the elliptic curve), plaintext M and ciphertext C satisfy these relationships

$$C = \{C_1, C_2\} = \{rP, M \times e(P_{ID}, rQ)\}$$

$$M = Dec(C, S_{ID}) = C_2 \times e(S_{ID}, C_1)^{-1}$$

If functions g and f are defined as

$$g(sk_1, \ldots, sk_N) = sk_1 + \ldots + sk_N \quad \bmod q$$

$$f(Dec(C, sk_n), m_{n+1})$$

$$= (Dec(C, sk_n) \times m_{n+1})/C_2$$

and if a set of secret-key segments $(sk_1, \ldots, sk_N)$ is selected to satisfy

$$S_{ID} = SK = sk_1 + \ldots + sk_N \quad \bmod q$$

then

$$m_{N-1} = f(Dec(C, sk_{N-1}), m_N)$$

$$= (Dec(C, sk_{N-1}) \times m_N)/C_2$$

$$= (C_2 \times e(sk_{N-1}, C_1)^{-1} \times C_2 \times e(sk_N, C_1)^{-1}/C_2$$

$$= C_2 \times e(sk_{N-1}, C_1)^{-1} e(sk_N, C_1)^{-1}$$

$$= C_2 \times e(sk_{N-1} + sk_N, C_1)^{-1}$$

because

$$m_N = Dec(C, sk_N) = C_2 \times e(sk_N, C_1)^{-1}$$

This is repeated to provide

$$m_n = f(Dec(C, sk_n), m_{n+1})$$

$$= C_2 \times e(sk_n + \ldots + sk_N, C_1)^{-1}$$

and then

$$m_1 = C_2 \times e(sk_1 + \ldots + sk_N, C_1)^{-1}$$

$$= M$$

Therefore,

$$Dec(C, SK) = Dec(C, g(sk_1, \ldots, sk_N))$$

$$m_N = \text{Dec}(C, sk_N)$$

$$m_n = f(\text{Dec}(C, sk_n), m_{n+1})$$

$$M = m_1$$

hold.

Third aspect

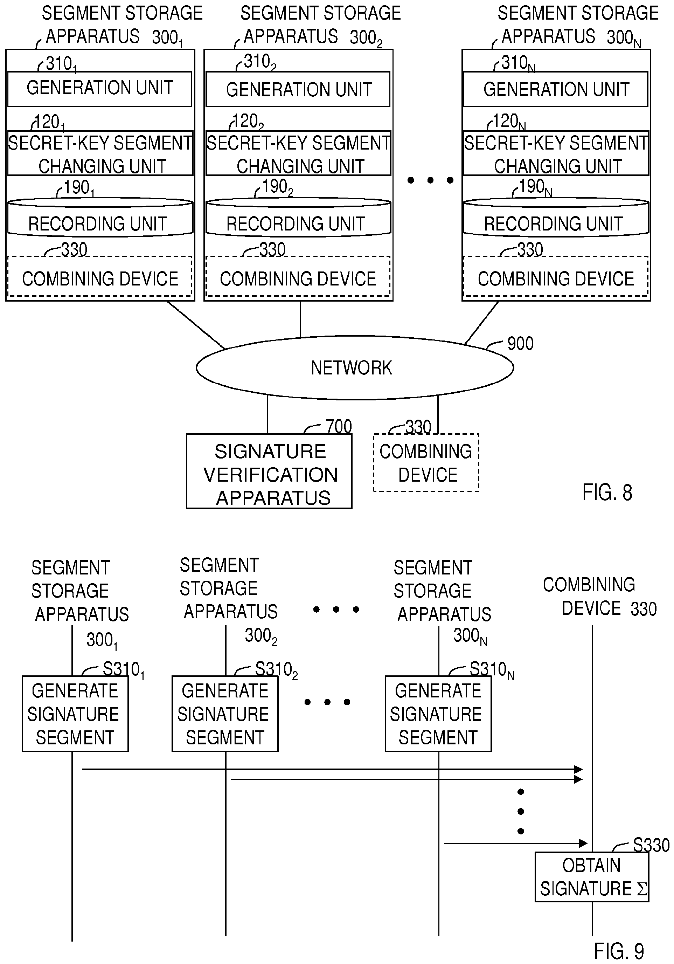

Fig. 8 shows an example of the functional configuration of a segmented secret-key storage system in a third aspect, and Fig. 9 shows a processing flow of generating a signature. Examples of a processing flow of changing secret-key segments are as shown in Figs. 3 to 5. The segmented secret-key storage system in the third aspect includes a signature verification apparatus 700, N segment storage apparatuses $300_1$, .., $300_N$, and a combining device 330, which are connected by a network 900. The signature verification apparatus 700 is an apparatus for verifying the validity of a generated signature $\Sigma$. The segment storage apparatus $300_n$ records a secret-key segment $sk_n$ among secret-key segments $sk_1$, ..., $sk_N$ obtained by segmenting a secret key SK corresponding to a public key PK. The combining device 330 obtains the signature $\Sigma$ for the plaintext M. In Fig. 8, the combining device 330 is represented by a dotted box and is shown in different places. The combining device 330 may be a single independent apparatus or may be disposed in any segment storage apparatus 300n. A plurality of apparatuses may include the combining device 330, and the combining device 330 to be used may be selected in each signature processing flow.

Suppose that the following relationship holds

$$\text{Sig}(M, SK) = \text{Sig}(M, g(sk_1, \ldots, sk_N))$$
$$= f(\text{Sig}(M, sk_1), \ldots, \text{Sig}(M, sk_N))$$

where N is an integer not less than 2, n is an integer between 1 and N, both inclusive, Sig(M, SK) is a symbol representing generation of the signature $\Sigma$ with the secret key SK, $g(sk_1, \ldots, sk_N)$ is a function of $sk_1, \ldots, sk_N$, $f(\sigma_1, \ldots, \sigma_N)$ is a function of $\sigma_1, \ldots, \sigma_N$, and ^ is a symbol representing a power.

Each segment storage apparatus $300_n$ includes a generation unit $310_n$, a secret-key segment changing unit $120_n$, and a recording unit $190_n$. The recording unit $190_n$ records the secret-key segment $sk_n$. The generation unit $310_n$ uses the secret-key segment $sk_n$ to obtain a signature segment $\sigma_n$ given by $\sigma_n = \text{Sig}(M, sk_n)$ and sends the signature segment $\sigma_n$ to the combining device 330 ($S310_n$). The combining device 330 obtains the signature $\Sigma$ according to $\Sigma = f(\sigma_1, \ldots, \sigma_N)$ ($S330$).

The secret-key segment changing unit $120_n$ obtains, periodically or under a predetermined condition, a set of secret-key segments $(sk_1', \ldots, sk_N')$ which satisfies

$$\text{Sig}(M, SK) = \text{Sig}(M, g(sk_1', \ldots, sk_N'))$$
$$= f(\text{Sig}(M, sk_1'), \ldots, \text{Sig}(M, sk_N'))$$

and which differs from $(sk_1, \ldots, sk_N)$, and updates the secret-key segment $sk_n$ recorded in the recording unit $190_n$ to $sk_n'$ ($S120_n$). For example, if functions g and f are defined to satisfy

$$\text{Sig}(M, SK) = \text{Sig}(M, g(sk_1, \ldots, sk_N))$$
$$= f(\text{Sig}(M, sk_1), \ldots, \text{Sig}(M, sk_N))$$

when the relationship

$$SK = sk_1 + \ldots + sk_N$$

holds, a set of secret-key segments ($sk_1$', ..., $sk_N$') that satisfies

$$sk_1' + \ldots + sk_N' = sk_1 + \ldots + sk_N$$

should be obtained. Alternatively, if functions g and f are defined to satisfy

$$Sig(M, SK) = Sig(M, g(sk_1, \ldots, sk_N))$$
$$= f(Sig(M, sk_1), \ldots, Sig(M, sk_N))$$

when the relationship

$$SK = sk_1 + \ldots + sk_N \quad \mod q$$

holds, a set of secret-key segments ($sk_1$', ..., $sk_N$') that satisfies

$$sk_1' + \ldots + sk_N' \quad \mod q = sk_1 + \ldots + sk_N \quad \mod q$$

should be obtained. In those examples, the requirements of the set of segments ($sk_1$', ..., $sk_N$') are the same as those in the first embodiment, and the flow of changing the set of segments ($sk_1$', ..., $sk_N$') is the same as in the first embodiment (Figs. 3 to 5).

According to the segmented secret-key storage system in the third aspect, the secret key SK is not revealed unless the secret-key segments are stolen from all the segment storage apparatuses in an interval between changes made to the secret-key segments. Accordingly, the risk of leakage can be greatly reduced in comparison with the risk of leakage of the secret key from a single apparatus.

An existing single signature generation apparatus that records the secret key SK can migrate to the segment storage apparatus $300_N$ in the third aspect through the following procedure: Add the secret-key segment changing unit $120_N$ to the existing signature generation apparatus; and connect the segment storage apparatuses $300_1$ to $300_{N-1}$ in which the recording units $190_1$ to $190_{N-1}$ record $sk_1 = \ldots = sk_{N-1} = 0$, to the network 900. This configuration sets the initial state to $sk_N = SK$ and $sk_1 = \ldots = sk_{N-1} = 0$. Then, when the secret key is segmented by changing the first set of secret-key segments ($sk_1$, ..., $sk_N$), the segmented secret-key storage system in the third aspect can be configured. It is thus easy to migrate to the segmented secret-key storage system in the third aspect from the existing system.

Examples of applicable signature methods

When the segmented secret-key storage system in the third aspect is implemented, the relationship

$$Sig(M, SK) = Sig(M, g(sk_1, \ldots, sk_N))$$
$$= f(Sig(M, sk_1), \ldots, Sig(M, sk_N))$$

must hold. As for an RSA signature, for example, plaintext M and a signature $\Sigma$ satisfy the relationships

$$\Sigma = Sig(M, d) = M\textasciicircum d \quad \mod q \quad (\text{Signature generation})$$

$$M = \Sigma\textasciicircum e \quad \mod q \quad (\text{Signature verification})$$

where q is the composite (product) of two large prime numbers, {q,e} is the public key PK, and d is the secret key SK. If functions g and g are defined as

$$g(sk_1, \ldots, sk_N) = sk_1 + \ldots + sk_N$$

$$f(Sig(M, sk_1), \ldots, Sig(M, sk_N))$$
$$= Sig(M, sk_1) \times \ldots \times Sig(M, sk_N) \quad mod \ q$$

and if a set of secret-key segments $(sk_1, \ldots, sk_N)$ is selected to satisfy

$$d = SK = sk_1 + \ldots + sk_N$$

then

$$f(Sig(M, sk_1), \ldots, Sig(M, sk_N))$$
$$= M^\wedge(sk_1 + \ldots + sk_N) \quad mod \ q$$
$$= \Sigma$$

because

$$Sig(M, sk_n) = M^\wedge sk_n$$

Therefore,

$$Sig(M, SK) = Sig(M, g(sk_1, \ldots, sk_N))$$
$$= f(Sig(M, sk_1), \ldots, Sig(M, sk_N))$$

holds. This description does not limit the signature method that implements this aspect. Other signature methods are also applicable so long as the conditions given above are satisfied.

Fourth aspect

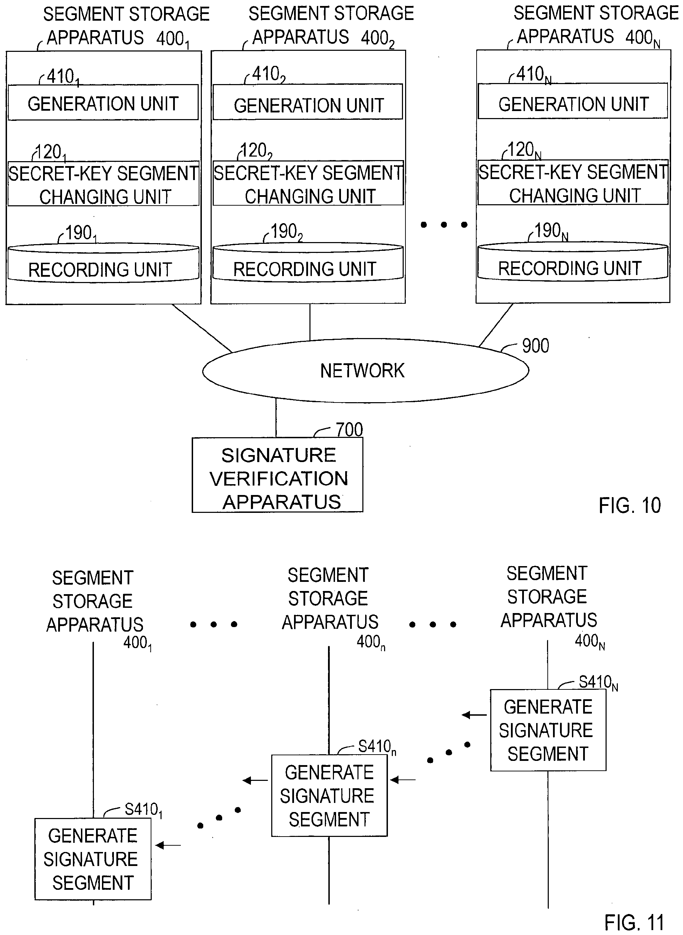

Fig. 10 shows an example of the functional configuration of a segmented secret-key storage system in a fourth aspect, and Fig. 11 shows a processing flow of generating a signature. Examples of a processing flow of changing secret-key segments are as shown in Figs. 3 to 5. The segmented secret-key storage system in the fourth aspect includes a signature verification apparatus 700 and N segment storage apparatuses $400_1, \ldots, 400_N$, which are connected by a network 900. The signature verification apparatus 700 is an apparatus for verifying the validity of a generated signature $\Sigma$. The segment storage apparatus $400_n$ records a secret-key segment $sk_n$ among secret-key segments $sk_1, \ldots, sk_N$ obtained by segmenting a secret key SK corresponding to a public key PK.

Suppose that the following relationships hold

$$Sig(M, SK) = Sig(M, g(sk_1, \ldots, sk_N))$$

$$\sigma_N = Sig(M, sk_N)$$

$$\sigma_n = f(Sig(M, sk_n), \sigma_{n+1})$$

$$\Sigma = \sigma_1$$

where N is an integer not less than 2, n is an integer between 1 and N, both inclusive, $Sig(M, SK)$ is a symbol representing generation of a signature $\Sigma$ with the secret key SK, $g(sk_1, ..., sk_N)$ is a function of $sk_1, ..., sk_N$, $f(Sig(M, sk_n), \sigma_{n+1})$ is a function of $Sig(M, sk_n)$ and $\sigma_{n+1}$, and ^ is a symbol representing a power.

Each segment storage apparatus $400_n$ includes a generation unit $410_n$, a secret-key segment changing unit $120_n$, and a recording unit $190_n$. The recording unit $190_n$ records a secret-key segment $sk_n$. The generation unit $410_N$ of the segment storage apparatus $400_N$ uses the secret-key segment $sk_N$ to obtain a signature segment $\sigma_N$ given by $\sigma_N = Sig(M, sk_N)$ and sends the signature segment $\sigma_N$ to the segment storage apparatus $400_{N-1}$ (S410$_N$).

The generation unit $410_n$ of the segment storage apparatus $400_n$ (n = 2, ..., N -1) uses the signature segment $\sigma_{n+1}$ obtained from the segment storage apparatus $400_{n+1}$ and the secret-key segment $sk_n$ to obtain a signature segment $\sigma_n$ given by $\sigma_n = f(Sig(M, sk_n), \sigma_{n+1})$, and sends the signature segment $\sigma_n$ to the segment storage apparatus $400_{n-1}$ (S410$_n$). However, when N = 2, the segment storage apparatus $400_n$ (n = 2, ..., N-1) is not present. The segment storage apparatus $400_1$ uses the signature segment $\sigma_2$ obtained from the segment storage apparatus $400_2$ and the secret-key segment $sk_1$ to obtain a signature $\Sigma$ given by $\Sigma = f(Sig(M, sk_1), \sigma_2)$ (S410$_1$).

The secret-key segment changing unit $120_n$ obtains, periodically or under a predetermined condition, a set of secret-key segments ($sk_1'$, ..., $sk_N'$) which satisfies the relationships

$$Sig(M, SK) = Sig(M, g(sk_1', ..., sk_N'))$$

$$\sigma_N = Sig(M, sk_N')$$

$$\sigma_n = f(Sig(M, sk_n'), \sigma_{n+1})$$

$$\Sigma = \sigma_1$$

and which differs from ($sk_1$, ..., $sk_N$), and updates the secret-key segment $sk_n$ recorded in the recording unit $190_n$ to $sk_n'$ (S120$_n$). For example, if functions g and f are defined to satisfy

$$Sig(M, SK) = Sig(M, g(sk_1, ..., sk_N))$$

$$\sigma_N = Sig(M, sk_N)$$

$$\sigma_n = f(Sig(M, sk_n), \sigma_{n+1})$$

$$\Sigma = \sigma_1$$

when the relationship

$$SK = sk_1 + ... + sk_N$$

holds, a set of secret-key segments ($sk_1'$, ..., $sk_N'$) that satisfies

$$sk_1' + \ldots + sk_N' = sk_1 + \ldots + sk_N$$

should be obtained. Alternatively, if functions g and f are defined to satisfy

$$Sig(M, SK) = Sig(M, g(sk_1, \ldots, sk_N))$$

$$\sigma_N = Sig(M, sk_N)$$

$$\sigma_n = f(Sig(M, sk_n), \sigma_{n+1})$$

$$\Sigma = \sigma_1$$

when the relationship

$$SK = sk_1 + \ldots + sk_N \quad \mod q$$

holds, a set of secret-key segments $(sk_1', \ldots, sk_N')$ that satisfies

$$sk_1' + \ldots + sk_N' \quad \mod q = sk_1 + \ldots + sk_N \quad \mod q$$

should be obtained. In those examples, the requirements of the set of segments $(sk_1', \ldots, sk_N')$ are the same as those in the first embodiment, and the flow of changing the set of segments $(sk_1', \ldots, sk_N')$ is the same as in the first embodiment (Figs. 3 to 5).

According to the segmented secret-key storage system in the fourth aspect, the secret key SK is not revealed unless the secret-key segments are stolen from all the segment storage apparatuses in an interval between changes made to the secret-key segments. Accordingly, the risk of leakage can be greatly reduced in comparison with the risk of leakage of the secret key from a single apparatus.

An existing single signature generation apparatus that records the secret key SK can migrate to the segment storage apparatus $400_N$ in the fourth aspect through the following procedure: Add the secret-key segment changing unit $120_N$ to the existing signature generation apparatus; and connect the segment storage apparatuses $400_1$ to $400_{N-1}$ in which the recording units $190_1$ to $190_{N-1}$ record $sk_1 = \ldots = sk_{N-1} = 0$, to the network 900. This configuration sets the initial state to $sk_N = SK$ and $sk_1 = \ldots = sk_{N-1} = 0$. Then, when the secret key is segmented by changing the first set of secret-key segments $(sk_1, \ldots, sk_N)$, the segmented secret-key storage system in the fourth aspect can be configured. It is thus easy to migrate to the segmented secret-key storage system in the fourth aspect from the existing system.

Examples of applicable signature methods

When the segmented secret-key storage system in the fourth aspect is implemented, the relationships

$$Sig(M, SK) = Sig(M, g(sk_1, \ldots, sk_N))$$

$$\sigma_n = f(Sig(M, sk_n), \sigma_{n+1})$$

must hold. As for an RSA signature, for example, plaintext M and signature $\Sigma$ satisfy the relationships

$$\Sigma = Sig\,(M, d) = M^{\wedge}d \quad \mod q \quad (\text{Signature generation})$$

$$M = \Sigma^{\wedge}e \quad \bmod q \quad \text{(Signature verification)}$$

where q is the composite (product) of two large prime numbers, {q, e} is the public key, and d is the secret key SK. If functions g and f are defined as

$$g(sk_1, \ldots, sk_N) = sk_1 + \ldots + sk_N$$

$$f(Sig(M, sk_n), \sigma_{n+1})$$
$$= Sig(M, sk_n) \times \sigma_{n+1} \quad \bmod q$$

and if a set of secret-key segments $(sk_1, \ldots, sk_N)$ is selected to satisfy

$$d = SK = sk_1 + \ldots + sk_N$$

then

$$\sigma_{N-1} = f(Sig(M, sk_{N-1}), \sigma_N)$$
$$= M^{\wedge}(sk_{N-1} + sk_N) \quad \bmod q$$

because

$$\sigma_N = Sig(M, sk_N) = M^{\wedge}sk_N \quad \bmod q$$

Therefore,

$$\sigma_n = f(Sig(M, sk_n), \sigma_{n+1})$$
$$= M^{\wedge}(sk_n + \ldots + sk_N) \quad \bmod q$$

and then

$$m_1 = M^{\wedge}(sk_1 + \ldots + sk_N) \quad \bmod q$$
$$= \Sigma$$

As a result,

$$Sig(M, SK) = Sig(M, g(sk_1, \ldots, sk_N))$$

$$\sigma_N = Sig(M, sk_N)$$

$$\sigma_n = f(Sig(M, sk_n), \sigma_{n+1})$$

$$\Sigma = \sigma_1$$

hold. The description does not limit the signature method that implements this aspect. Other signature methods are also applicable so long as the conditions given above are satisfied.

Program, recording medium

Each type of processing described above may be executed not only time sequentially according to the order of description but also in parallel or individually when necessary or according to the processing capabilities of the apparatuses that execute the processing. Appropriate changes can be made to the above embodiments without departing from the scope of the present invention.

When the configurations described above are implemented by a computer, the processing details of the functions that should be provided by each apparatus are described in a program. When the program is executed by a computer, the processing functions described above are implemented on the computer.

The program containing the processing details can be recorded in a computer-readable recording medium. The computer-readable recording medium can be any type of medium, such as a magnetic storage device, an optical disc, a magneto-optical recording medium, or a semiconductor memory.

This program is distributed by selling, transferring, or lending a portable recording medium such as a DVD or a CD-ROM with the program recorded on it, for example. The program may also be distributed by storing the program in a storage unit of a server computer and transferring the program from the server computer to another computer through the network.

A computer that executes this type of program first stores the program recorded on the portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated correspondingly as a program (something that is not a direct instruction to the computer but is data or the like that has characteristics that determine the processing executed by the computer).

In the description given above, the apparatuses are implemented by executing the predetermined programs on the computer, but at least a part of the processing details may be implemented by hardware.

DESCRIPTION OF REFERENCE NUMERALS

100, 200, 300, 400: Segment storage apparatus
110, 210: Decryption unit
120: Secret-key segment changing unit
130, 330: Combining device
190: Recording unit
310, 410: Generation unit
600: Encryption apparatus
700: Signature verification apparatus
900: Network

**Claims**

1. A segment storage apparatus ($100_n$) of N segment storage apparatuses ($100_1$, ..., $100_N$) which respectively record secret-key segments $sk_1$, ..., $sk_N$ obtained by segmenting a secret key SK corresponding to a public key PK, in a segmented secret-key storage system,
the relationship

$$Dec(C, SK) = Dec(C, g(sk_1, ..., sk_N))$$

$$= f(Dec(C, sk_1), ..., Dec(C, sk_N))$$

being satisfied, where N is an integer not less than 2, n is an integer greater than or equal to 1 and less than or equal to N, $Dec(C, SK)$ is a symbol representing decryption of the ciphertext C with the secret key SK, $g(sk_1, ..., sk_N)$ is a function of $sk_1, ..., sk_N$, and $f(m_1, ..., m_N)$ is a function of $m_1, ..., m_N$;
the segment storage apparatuses $(100_n)$ comprising:

a decryption unit $(110_n)$ adapted to use the secret-key segment $sk_n$ recorded in the segment storage apparatus to obtain a plaintext segment $m_n$ given by $m_n = Dec(C, sk_n)$ and send the plaintext segment $m_n$ to a combining device; and
a secret-key segment changing unit $(120_n)$ adapted to change the secret-key segment $sk_n$ to $sk_n'$ such that a set of secret-key segments $(sk_1', ..., sk_N')$ is obtained that satisfies

$$Dec(C, SK) = Dec(C, g(sk_1', ..., sk_N'))$$

$$= f(Dec(C, sk_1'), ..., Dec(C, sk_N'))$$

and differs from $(sk_1, ..., sk_N)$,
**characterized in that**
the secret-key segment changing unit $(120_n)$ is adapted to change, periodically or under a predetermined condition, the secret-key segments $sk_n$ to $sk_n'$;
the relationship

$$C = \{C_1, C_2\} = \mathcal{2} \quad \blacksquare \{G\char`^r, MH\char`^r\}$$

$$M = Dec(C, x) = C_2/(C_1\char`^x)$$

is satisfied, where {G, H} is the public key PK, x is the secret key SK and an integer greater than or equal to 0 and less than or equal to q-1, $H = G\char`^x$, r is a random number and an integer greater than or equal to 0 and less than or equal to q-1, q is the order of a cyclic group, G is the generator of the cyclic group, M is a plaintext and an element of the cyclic group, C is the ciphertext and an element of the cyclic group, and ^ is a symbol representing a power; and
the functions g and f are defined as

$$g(sk_1, ..., sk_N) = sk_1 + ...+ sk_N \mod q$$

$$f(Dec(C, sk_1), ..., Dec(C, sk_N))$$

$$= Dec(C, sk_1) \times ...\times Dec(C, sk_N)/(C_2\char`^(N-1)).$$

2. A segment storage apparatus $(200_n)$ of N segment storage apparatuses $(200_1, ..., 200_N)$ which respectively record secret-key segments $sk_1, ..., sk_N$ obtained by segmenting a secret key SK corresponding to a public key PK, in a segmented secret-key storage system,
the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, $Dec(C, SK)$ is a symbol representing decryption of the ciphertext C with the secret key SK, $g(sk_1, ..., sk_N)$ is a function of $sk_1, ..., sk_N$, and $f(Dec(C, sk_n), m_{n+1})$ is a function of $Dec(C, sk_n)$ and $m_{n+1}$;
the segment storage apparatus ($200_n$) comprising:

a decryption unit ($210_n$) adapted to use the secret-key segment $sk_N$ to obtain a plaintext segment $m_N$ given by $m_N = Dec(C, sk_N)$ and send the plaintext segment $m_N$ to the segment storage apparatus which records the secret-key segment $sk_{N-1}$ when the secret-key segment $sk_N$ is recorded, use a plaintext segment $m_2$ obtained from the segment storage apparatus which records the secret-key segment $sk_2$ and the secret-key segment $sk_1$ to obtain plaintext M given by $M = f(Dec(C, sk_1), m_2)$ when the secret-key segment $sk_1$ is recorded, and use a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and send the plaintext segment $m_n$ to the segment storage apparatus which records the secret-key segment $sk_{n-1}$ when N is not less than 3 and the secret-key segment $sk_n$ (n is 2 to N - 1) is recorded; and
a secret-key segment changing unit ($120_n$) adapted to change the secret-key segment $sk_n$ to $sk_n'$ such that a set of secret-key segments ($sk_1', ... sk_N'$) is obtained that satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and differs from ($sk_1, ..., sk_N$),
**characterized in that**
the secret-key segment changing unit ($120_n$) is adapted to change, periodically or under a predetermined condition, the secret-key segments $sk_n$ to $sk_{n'}$ ;
the relationship

$$C = \{C_1, C_2\} = \{G^r, MH^r\}$$

$$M = Dec(C, x) = C_2/(C_1^x)$$

is satisfied, where $\{G, H\}$ is the public key PK, x is the secret key SK and an integer greater than or equal to 0 and less than or equal to q-1, $H = G^x$, r is a random number and an integer greater than or equal to 0 and less than or equal to q-1, q is the order of a cyclic group, G is the generator of the cyclic group, M is a plaintext and an element of the cyclic group, C is the ciphertext and an element of the cyclic group, and $\wedge$ is a symbol representing a power; and
the functions g and f are defined as

$$g(sk_1, ..., sk_N) = sk_1 + ...+ sk_N \mod q$$

$$f(\text{Dec}(C, sk_n), m_{n+1})$$

$$= (\text{Dec}(C, sk_n) \times m_{n+1})/C_2.$$

3. A segment storage apparatus $(100_n)$ of N segment storage apparatuses $(100_1, ..., 100_N)$ which respectively record secret-key segments $sk_1, ..., sk_N$ obtained by segmenting a secret key SK corresponding to a public key PK, in a segmented secret-key storage system,
the relationship

$$\text{Dec}(C, SK) = \text{Dec}(C, g(sk_1, ..., sk_N))$$

$$= f(\text{Dec}(C, sk_1), ..., \text{Dec}(C, sk_N))$$

being satisfied, where N is an integer not less than 2, n is an integer greater than or equal to 1 and less than or equal to N, $\text{Dec}(C, SK)$ is a symbol representing decryption of the ciphertext C with the secret key SK, $g(sk_1, ..., sk_N)$ is a function of $sk_1, ..., sk_N$, and $f(m_1, ..., m_N)$ is a function of $m_1, ..., m_N$;
the segment storage apparatus $(100_n)$ comprising:

a decryption unit $(110_n)$ adapted to use the secret-key segment $sk_n$ recorded in the segment storage apparatus to obtain a plaintext segment $m_n$ given by $m_n = \text{Dec}(C, sk_n)$ and send the plaintext segment $m_n$ to a combining device; and
a secret-key segment changing unit $(120_n)$ adapted to change the secret-key segment $sk_n$ to $sk_n'$ such that a set of secret-key segments $(sk_1', ..., sk_N')$ satisfies

$$\text{Dec}(C, SK) = \text{Dec}(C, g(sk_1', ..., sk_N'))$$

$$= f(\text{Dec}(C, sk_1'), ..., \text{Dec}(C, sk_N'))$$

and differs from $(sk_1, ..., sk_N)$,
**characterized in that**
the secret-key segment changing unit $(120_n)$ is adapted to change, periodically or under a predetermined condition, the secret-key segments $sk_n$ to $sk_n'$;
the relationship

$$C = \{C_1, C_2\} = \{rG, M+rH\}$$

$$M = \text{Dec}(C, x) = C_2 - xC_1$$

is satisfied, where $\{G, H\}$ is the public key PK, x is the secret key SK and an integer greater than or equal to 1 and less than or equal to q-1, $H = xG$, r is a random number and an integer greater than or equal to 0 and less than or equal to q-1, q is the order of a base point G on the elliptic curve, M is a plaintext, and C is the ciphertext; and
the functions g and f are defined as

$$g(sk_1, ..., sk_N) = sk_1 + ...+ sk_N \ \text{mod} \ q$$

$$f(\text{Dec}(C, sk_1), ..., \text{Dec}(C, sk_N))$$

$$= \text{Dec}(C, sk_1) +...+ \text{Dec}(C, sk_N) - (N-1)C_2.$$

4. A segment storage apparatus $(200_n)$ of N segment storage apparatuses $(200_1, ..., 200_N)$ which respectively record secret-key segments $sk_1, ..., sk_N$ obtained by segmenting a secret key SK corresponding to a public key PK, in a segmented secret-key storage system,
the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, $Dec(C, SK)$ is a symbol representing decryption of the ciphertext C with the secret key SK, $g(sk_1, ..., sk_N)$ is a function of $sk_1, ..., sk_N$, and $f(Dec(C, sk_n), m_{n+1})$ is a function of $Dec(C, sk_n)$ and $m_{n+1}$;
the segment storage apparatus $(200_n)$ comprising:

a decryption unit $(210_n)$ adapted to use the secret-key segment $sk_N$ to obtain a plaintext segment $m_N$ given by $m_N = Dec(C, sk_N)$ and send the plaintext segment $m_N$ to the segment storage apparatus which records the secret-key segment $sk_{N-1}$ when the secret-key segment $sk_N$ is recorded, use a plaintext segment $m_2$ obtained from the segment storage apparatus which records the secret-key segment $sk_2$ and the secret-key segment $sk_1$ to obtain plaintext M given by $M = f(Dec(C, sk_1), m_2)$ when the secret-key segment $sk_1$ is recorded, and use a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and send the plaintext segment $m_n$ to the segment storage apparatus which records the secret-key segment $sk_{n-1}$ when N is not less than 3 and the secret-key segment $sk_n$ (n is 2 to N-1) is recorded; and
a secret-key segment changing unit $(120_n)$ adapted to change the secret-key segment $sk_n$ to $sk_n'$ such that a set of secret-key segments $(sk_1', ..., sk_N')$ satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and differs from $(sk_1, ..., sk_N)$,
**characterized in that**
the secret-key segment changing unit $(120_n)$ is adapted to change, periodically or under a predetermined condition, the secret-key segments $sk_n$ to $sk_n'$;
the relationship

$$C = \{C_1, C_2\} = \{rG, M+rH\}$$

$$M = Dec(C, x) = C_2 - xC_1$$

is satisfied, where $\{G, H\}$ is the public key PK, x is the secret key SK and an integer greater than or equal to 1 and less than or equal to q-1, H = xG, r is a random number and an integer greater than or equal to 0 and less than or equal to q-1, q is the order of a base point G on the elliptic curve, M is a plaintext, and C is the ciphertext; and the functions g and f are defined as

$$g(sk_1, ..., sk_N) = sk_1 + ...+ sk_N \mod q$$

$$f(Dec(C, sk_n), m_{n+1})$$
$$= Dec(C, sk_n) + m_{n+1} - C_2.$$

5. A segment storage apparatus ($100_n$) of N segment storage apparatuses ($100_1, ..., 100_N$) which respectively record secret-key segments $sk_1, ..., sk_N$ obtained by segmenting a secret key SK corresponding to a public key PK, in a segmented secret-key storage system,
the relationship

$$Dec(C, SK) = Dec(C, g(sk_1, ..., sk_N))$$
$$= f(Dec(C, sk_1), ..., Dec(C, sk_N))$$

being satisfied, where N is an integer not less than 2, n is an integer greater than or equal to 1 and less than or equal to N, Dec(C, SK) is a symbol representing decryption of the ciphertext C with the secret key SK, $g(sk_1, ..., sk_N)$ is a function of $sk_1, ..., sk_N$, and $f(m_1, ..., m_N)$ is a function of $m_1, ..., m_N$;
the segment storage apparatus ($100_n$) comprising:

a decryption unit ($110_n$) adapted to use the secret-key segment $sk_n$ recorded in the segment storage apparatus to obtain a plaintext segment $m_n$ given by $m_n = Dec(C, sk_n)$ and send the plaintext segment $m_n$ to a combining device; and
a secret-key segment changing unit ($120_n$) adapted to change the secret-key segment $sk_n$ to $sk_n'$ such that a set of secret-key segments ($sk_1', ..., sk_N'$) satisfies

$$Dec(C, SK) = Dec(C, g(sk_1', ..., sk_N'))$$
$$= f(Dec(C, sk_1'), ..., Dec(C, sk_N'))$$

and differs from ($sk_1, ..., sk_N$),
**characterized in that**
the secret-key segment changing unit ($120_n$) is adapted to change, periodically or under a predetermined condition, the secret-key segments $sk_n$ to $sk_n'$;
the relationship

$$C = \{C_1, C_2\} = \{rP, M \times e(P_{ID}, rQ)\}$$

$$M = Dec(C, S_{ID}) = C_2 \times e(S_{ID}, C_1)^{-1}$$

is satisfied, where $\{P_{ID}, P, Q\}$ is the public key PK, $S_{ID}$ is the secret key SK and an integer greater than or equal to 1 and less than or equal to q-1, $S_{ID} = sP_{ID}$, Q = sP, r is a random number and an integer greater than or equal to 0 and less than or equal to q-1, $P_{ID}$ is a point on an elliptic curve of order q transformed from ID by using a hash function; P is the generator of a subgroup on the elliptic curve; s is the master secret key; e( , ) represents pairing on the elliptic curve, M is a plaintext, C is the ciphertext, and ^ is a symbol representing a power; and
the functions g and f are defined as

$$g(sk_1, ..., sk_N) = sk_1 + ... + sk_N \mod q$$

$$f(Dec(C, sk_1), ..., Dec(C, sk_N))$$

$$= Dec(C, sk_1) \times ... \times Dec(C, sk_N)/(C_2\text{^}(N-1)).$$

6. A segment storage apparatus ($200_n$) of N segment storage apparatuses ($200_1$, ..., $200_N$) which respectively record secret-key segments $sk_1$, ..., $sk_N$ obtained by segmenting a secret key SK corresponding to a public key PK, in a segmented secret-key storage system,
the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, Dec(C, SK) is a symbol representing decryption of the ciphertext C with the secret key SK, $g(sk_1, ..., sk_N)$ is a function of $sk_1$, ..., $sk_N$, and $f(Dec(C, sk_n), m_{n+1})$ is a function of $Dec(C, sk_n)$ and $m_{n+1}$;
the segment storage apparatus ($200_n$) comprising:

a decryption unit ($210_n$) adapted to use the secret-key segment $sk_N$ to obtain a plaintext segment $m_N$ given by $m_N = Dec(C, sk_N)$ and send the plaintext segment $m_N$ to the segment storage apparatus which records the secret-key segment $sk_{N-1}$ when the secret-key segment $sk_N$ is recorded, use a plaintext segment $m_2$ obtained from the segment storage apparatus which records the secret-key segment $sk_2$ and the secret-key segment $sk_1$ to obtain plaintext M given by $M = f(Dec(C, sk_1), m_2)$ when the secret-key segment $sk_1$ is recorded, and use a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and send the plaintext segment $m_n$ to the segment storage apparatus which records the secret-key segment $sk_{n-1}$ when N is not less than 3 and the secret-key segment $sk_n$ (n is 2 to N - 1) is recorded; and
a secret-key segment changing unit ($120_n$) adapted to change the secret-key segment $sk_n$ to $sk_n'$ such that a set of secret-key segments ($sk_1'$, ..., $sk_N'$) satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and differs from ($sk_1$, ..., $sk_N$),
**characterized in that**
the secret-key segment changing unit ($120_n$) is adapted to change, periodically or under a predetermined condition, the secret-key segments $sk_n$ to $sk_n$';
the relationship

$$C = \{C_1, C_2\} = \{rP, M \times e(P_{ID}, rQ)\}$$

$$M = Dec(C, S_{ID}) = C_2 \times e(S_{ID}, C_1)^{-1}$$

is satisfied, where $\{P_{ID}, P, Q\}$ is the public key PK, $S_{ID}$ is the secret key SK and an integer greater than or equal to 1 and less than or equal to q-1, $S_{ID} = sP_{ID}$, $Q = sP$, r is a random number and an integer greater than or equal to 0 and less than or equal to q-1, $P_{ID}$ is a point on an elliptic curve of order q transformed from ID by using a hash function; P is the generator of a subgroup on the elliptic curve; s is the master secret key; e(,) represents pairing on the elliptic curve, M is a plaintext, and C is the ciphertext; and
the functions g and f are defined as

$$g(sk_1, ..., sk_N) = sk_1 + ...+ sk_N \mod q$$

$$f(Dec(C, sk_n), m_{n+1})$$
$$= (Dec(C, sk_n) \times m_{n+1})/C_2.$$

**7.** A segmented secret-key storage method using:

N segment storage apparatuses ($100_1$, ..., $100_N$) which respectively record secret-key segments $sk_1$, ..., $sk_N$ obtained by segmenting a secret key SK corresponding to a public key PK, and
a combining device (130) which obtains plaintext M corresponding to ciphertext C;
the relationship

$$Dec(C, SK) = Dec(C, g(sk_1, ..., sk_N))$$
$$= f(Dec(C, sk_1), ..., Dec(C, sk_N))$$

being satisfied, where N is an integer not less than 2, n is an integer greater than or equal to 1 and less than or equal to N, Dec(C, SK) is a symbol representing decryption of the ciphertext C with the secret key SK, $g(sk_1, ..., sk_N)$ is a function of $sk_1$, ..., $sk_N$, and $f(m_1, ..., m_N)$ is a function of $m_1$, ..., $m_N$;
the segmented secret-key storage method comprising:

a decryption step ($S110_n$) in which each of the segment storage apparatuses uses the secret-key segment $sk_n$ recorded in the segment storage apparatus ($100_n$) to obtain a plaintext segment $m_n$ given by $m_n = Dec(C, sk_n)$ and sends the plaintext segment $m_n$ to the combining device;
a combining step (S130) in which the combining device obtains the plaintext M given by $M = f(m_1, ...,m_N)$; and
a secret-key segment changing step ($S121_n$, $S122_n$, S123, S124) in which the segment storage apparatus obtains a set of secret-key segments ($sk_1$', ..., $sk_N$') that satisfies

$$Dec(C, SK) = Dec(C, g(sk_1', ..., sk_N'))$$
$$= f(Dec(C, sk_1'), ..., Dec(C, sk_N'))$$

and that differs from ($sk_1$, ..., $sk_N$) and changes the secret-key segment $sk_n$ recorded in the segment storage apparatus to $sk_n$',
**characterized in that**
the secret-key segment changing step obtains, periodically or under a predetermined condition, the set of secret-key segments ($sk_1$', ..., $sk_N$');
the relationship

$$C = \{C_1, C_2\} = \{G^{\wedge}r, MH^{\wedge}r\}$$

$$M = Dec(C, x) = C_2/(C_1^{\wedge}x)$$

is satisfied, where $\{G, H\}$ is the public key PK, x is the secret key SK and an integer greater than or equal to 0 and less than or equal to q-1, $H = G^{\wedge}x$, r is a random number and an integer greater than or equal to 0 and less than or equal to q-1, q is the order of a cyclic group, G is the generator of the cyclic group, M is a plaintext and an element of the cyclic group, C is the ciphertext and an element of the cyclic group, and $^{\wedge}$ is a symbol representing a power; and
the functions g and f are defined as

$$g(sk_1, ..., sk_N) = sk_1 + ...+ sk_N \mod q$$

$$f(Dec(C, sk_1), ..., Dec(C, sk_N))$$
$$= Dec(C, sk_1) \times...\times Dec(C, sk_N)/(C_2^{\wedge}(N-1)).$$

8. A segmented secret-key storage method using N segment storage apparatuses $(200_1, ..., 200_N)$ which respectively record secret-key segments $sk_1, ..., sk_N$ obtained by segmenting a secret key SK corresponding to a public key PK, the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, $Dec(C, SK)$ is a symbol representing decryption of ciphertext C with the secret key SK, $g(sk_1, ..., sk_N)$ is a function of $sk_1, ..., sk_N$, and $f(Dec(C, sk_n), m_{n+1})$ is a function of $Dec(C, sk_n)$ and $m_{n+1}$;
the segmented secret-key storage method comprising:

an N-th decryption step $(S210_N)$ in which the segment storage apparatus $(200_N)$ which records the secret-key segment $sk_N$ uses the secret-key segment $sk_N$ to obtain a plaintext segment $m_N$ given by $m_N = Dec(C, sk_N)$ and sends the plaintext segment $m_N$ to the segment storage apparatus which records the secret-key segment $sk_{N-1}$;
an n-th decryption step $(S210_n)$ in which, if N is not less than 3, the segment storage apparatus $(200_n)$ which records the secret-key segment $sk_n$ (n is 2 to N - 1) uses a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and sends the plaintext segment $m_n$ to the segment storage apparatus which records the secret-key segment $sk_{n-1}$;
a first decryption step $(S210_1)$ in which the segment storage apparatus $(200_1)$ which records the secret-key segment $sk_1$ uses a plaintext segment $m_2$ obtained from the segment storage apparatus which records the secret-key segment $sk_2$ and the secret-key segment $sk_1$ to obtain plaintext M given by $M = f(Dec(C, sk_1), m_2)$; and
a secret-key segment changing step $(S121_n, S122_n, S123, S124)$ in which each of the segment storage apparatuses obtains a set of secret-key segments $(sk_1', ..., sk_N')$ that satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and that differs from $(sk_1, ..., sk_N)$ and changes the secret-key segment $sk_n$ recorded in the segment storage apparatus to $sk_n'$,
**characterized in that**
the secret-key segment changing step obtains, periodically or under a predetermined condition, the set of secret-key segments $(sk_1', ..., sk_N')$;
the relationship

$$C = \{C_1, C_2\} = \{G^{\wedge}r, MH^{\wedge}r\}$$

$$M = Dec(C, x) = C_2/(C_1^{\wedge}x)$$

is satisfied, where $\{G, H\}$ is the public key PK, x is the secret key SK and an integer greater than or equal to 0 and less than or equal to q-1, $H = G^{\wedge}x$, r is a random number and an integer greater than or equal to 0 and less than or equal to q-1, q is the order of a cyclic group, G is the generator of the cyclic group, M is a plaintext and an element of the cyclic group, C is the ciphertext and an element of the cyclic group, and $^{\wedge}$ is a symbol representing a power; and
the functions g and f are defined as

$$g(sk_1, ..., sk_N) = sk_1 + ...+ sk_N \mod q$$

$$f(Dec(C, sk_n), m_{n+1})$$
$$= (Dec(C, sk_n) \times m_{n+1})/C_2.$$

9. A segmented secret-key storage method using:

N segment storage apparatuses $(100_1, ..., 100_N)$ which respectively record secret-key segments $sk_1, ..., sk_N$ obtained by segmenting a secret key SK corresponding to a public key PK, and
a combining device (130) which obtains plaintext M corresponding to ciphertext C;
the relationship

$$Dec(C, SK) = Dec(C, g(sk_1, ..., sk_N))$$
$$= f(Dec(C, sk_1), ..., Dec(C, sk_N))$$

being satisfied, where N is an integer not less than 2, n is an integer greater than or equal to 1 and less than or equal to N, Dec(C, SK) is a symbol representing decryption of the ciphertext C with the secret key SK, $g(sk_1, ..., sk_N)$ is a function of $sk_1, ..., sk_N$, and $f(m_1, ..., m_N)$ is a function of $m_1, ..., m_N$;
the segmented secret-key storage method comprising:

a decryption step $(S110_n)$ in which each of the segment storage apparatuses uses the secret-key segment

$sk_n$ recorded in the segment storage apparatus ($100_n$) to obtain a plaintext segment $m_n$ given by $m_n =$ $Dec(C, sk_n)$ and sends the plaintext segment $m_n$ to the combining device;

a combining step (S130) in which the combining device obtains the plaintext M given by $M = f(m_1, ...,m_N)$; and

a secret-key segment changing step ($S121_n$, $S122_n$, S123, S124) in which the segment storage apparatus obtains a set of secret-key segments ($sk_1'$, ..., $sk_N'$) that satisfies

$$Dec(C, SK) = Dec(C, g(sk_1', ..., sk_N'))$$

$$= f(Dec(C, sk_1'), ..., Dec(C, sk_N'))$$

and that differs from ($sk_1$, ..., $sk_N$) and changes the secret-key segment $sk_n$ recorded in the segment storage apparatus to $sk_n'$,

**characterized in that**

the secret-key segment changing step obtains, periodically or under a predetermined condition, the set of secret-key segments ($sk_1'$, ..., $sk_N'$);

the relationship

$$C = \{C_1, C_2\} = \{rG, M+rH\}$$

$$M = Dec(C, x) = C_2 - xC_1$$

is satisfied, where {G, H} is the public key PK, x is the secret key SK and an integer greater than or equal to 1 and less than or equal to q-1, H = xG, r is a random number and an integer greater than or equal to 0 and less than or equal to q-1, q is the order of a base point G on the elliptic curve, M is a plaintext, and C is the ciphertext; and

the functions g and f are defined as

$$g(sk_1, ..., sk_N) = sk_1 + ...+ sk_N \mod q$$

$$f(Dec(C, sk_1), ..., Dec(C, sk_N))$$

$$= Dec(C, sk_1) +...+ Dec(C, sk_N) - (N-1)C_2.$$

10. A segmented secret-key storage method using N segment storage apparatuses ($200_1$, ..., $200_N$) which respectively record secret-key segments $sk_1$, ..., $sk_N$ obtained by segmenting a secret key SK corresponding to a public key PK, the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, Dec(C, SK) is a symbol representing decryption of ciphertext C with the secret key SK, $g(sk_1, ..., sk_N)$ is a function of $sk_1$, ..., $sk_N$, and $f(Dec(C, sk_n), m_{n+1})$ is a function of $Dec(C, sk_n)$ and $m_{n+1}$;

the segmented secret-key storage method comprising:

an N-th decryption step ($S210_N$) in which the segment storage apparatus ($200_N$) which records the secret-key segment $sk_N$ uses the secret-key segment $sk_N$ to obtain a plaintext segment $m_N$ given by $m_N = Dec(C, sk_N)$ and sends the plaintext segment $m_N$ to the segment storage apparatus which records the secret-key segment $sk_{N-1}$;

an n-th decryption step ($S210_n$) in which, if N is not less than 3, the segment storage apparatus ($200_n$) which records the secret-key segment $sk_n$ (n is 2 to N - 1) uses a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and sends the plaintext segment $m_n$ to the segment storage apparatus which records the secret-key segment $sk_{n-1}$;

a first decryption step ($S210_1$) in which the segment storage apparatus ($200_1$) which records the secret-key segment $sk_1$ uses a plaintext segment $m_2$ obtained from the segment storage apparatus which records the secret-key segment $sk_2$ and the secret-key segment $sk_1$ to obtain plaintext M given by $M = f(Dec(C, sk_1), m_2)$; and

a secret-key segment changing step ($S121_n$, $S122_n$, $S123$, $S124$) in which each of the segment storage apparatuses obtains a set of secret-key segments ($sk_1'$, ..., $sk_N'$) that satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and that differs from ($sk_1$, ..., $sk_N$) and changes the secret-key segment $sk_n$ recorded in the segment storage apparatus to $sk_n'$,

**characterized in that**

the secret-key segment changing step obtains, periodically or under a predetermined condition, the set of secret-key segments ($sk_1'$, ..., $sk_N'$);

the relationship

$$C = \{C_1, C_2\} = \{rG, M+rH\}$$

$$M = Dec(C, x) = C_2 - xC_1$$

is satisfied, where {G, H} is the public key PK, x is the secret key SK and an integer greater than or equal to 1 and less than or equal to q-1, H = xG, r is a random number and an integer greater than or equal to 0 and less than or equal to q-1, q is the order of a base point G on the elliptic curve, M is a plaintext, and C is the ciphertext; and the functions g and f are defined as

$$g(sk_1, ..., sk_N) = sk_1 + ...+ sk_N \mod q$$

$$f(Dec(C, sk_n), m_{n+1})$$
$$= Dec(C, sk_n) + m_{n+1} - C_2.$$

**11.** A segmented secret-key storage method using:

N segment storage apparatuses $(100_1, ..., 100_N)$ which respectively record secret-key segments $sk_1, ..., sk_N$ obtained by segmenting a secret key SK corresponding to a public key PK, and
a combining device (130) which obtains plaintext M corresponding to ciphertext C;
the relationship

$$Dec(C, SK) = Dec(C, g(sk_1, ..., sk_N))$$
$$= f(Dec(C, sk_1), ..., Dec(C, sk_N))$$

being satisfied, where N is an integer not less than 2, n is an integer greater than or equal to 1 and less than or equal to N, Dec(C, SK) is a symbol representing decryption of the ciphertext C with the secret key SK, $g(sk_1, ..., sk_N)$ is a function of $sk_1, ..., sk_N$, and $f(m_1, ..., m_N)$ is a function of $m_1, ..., m_N$;
the segmented secret-key storage method comprising:

a decryption step $(S110_n)$ in which each of the segment storage apparatuses uses the secret-key segment $sk_n$ recorded in the segment storage apparatus $(100_n)$ to obtain a plaintext segment $m_n$ given by $m_n = Dec(C, sk_n)$ and sends the plaintext segment $m_n$ to the combining device;
a combining step (S130) in which the combining device obtains the plaintext M given by $M = f(m_1, ..., m_N)$; and
a secret-key segment changing step $(S121_n, S122_n, S123, S124)$ in which the segment storage apparatus obtains a set of secret-key segments $(sk_1', ..., sk_N')$ that satisfies

$$Dec(C, SK) = Dec(C, g(sk_1', ..., sk_N'))$$
$$= f(Dec(C, sk_1'), ..., Dec(C, sk_N'))$$

and that differs from $(sk_1, ..., sk_N)$ and changes the secret-key segment $sk_n$ recorded in the segment storage apparatus to $sk_n'$,
**characterized in that**
the secret-key segment changing step obtains, periodically or under a predetermined condition, the set of secret-key segments $(sk_1', ..., sk_N')$;
the relationship

$$C = \{C_1, C_2\} = \{rP, M \times e(P_{ID}, rQ)\}$$

$$M = Dec(C, S_{ID}) = C_2 \times e(S_{ID}, C_1)^{-1}$$

is satisfied, where $\{P_{ID}, P, Q\}$ is the public key PK, $S_{ID}$ is the secret key SK and an integer greater than or equal to 1 and less than or equal to q-1, $S_{ID} = sP_{ID}$, $Q = sP$, r is a random number and an integer greater than or equal to 0 and less than or equal to q-1, $P_{ID}$ is a point on an elliptic curve of order q transformed from ID by using a hash function; P is the generator of a subgroup on the elliptic curve; s is the master secret key; e(,) represents pairing on the elliptic curve, M is a plaintext, C is the ciphertext, and $^$ is a symbol representing a power; and
the functions g and f are defined as

$$g(sk_1, ..., sk_N) = sk_1 + ... + sk_N \mod q$$

$$f(Dec(C, sk_1), ..., Dec(C, sk_N))$$
$$= Dec(C, sk_1) \times ... \times Dec(C, sk_N)/(C_2^{(N-1)}).$$

12. A segmented secret-key storage method using N segment storage apparatuses $(200_1, ..., 200_N)$ which respectively record secret-key segments $sk_1, ..., sk_N$ obtained by segmenting a secret key SK corresponding to a public key PK,

the relationships

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

being satisfied, where N is an integer not less than 2, n is an integer greater than or equal to 1 and less than or equal to N, $Dec(C, SK)$ is a symbol representing decryption of ciphertext C with the secret key SK, $g(sk_1, ..., sk_N)$ is a function of $sk_1, ..., sk_N$, and $f(Dec(C, sk_n), m_{n+1})$ is a function of $Dec(C, sk_n)$ and $m_{n+1}$;
the segmented secret-key storage method comprising:

an N-th decryption step ($S210_N$) in which the segment storage apparatus ($200_N$) which records the secret-key segment $sk_N$ uses the secret-key segment $sk_N$ to obtain a plaintext segment $m_N$ given by $m_N = Dec(C, sk_N)$ and sends the plaintext segment $m_N$ to the segment storage apparatus which records the secret-key segment $sk_{N-1}$;

an n-th decryption step ($S210_n$) in which, if N is not less than 3, the segment storage apparatus ($200_n$) which records the secret-key segment $sk_n$ (n is 2 to N - 1) uses a plaintext segment $m_{n+1}$ obtained from the segment storage apparatus which records the secret-key segment $sk_{n+1}$ and the secret-key segment $sk_n$ to obtain a plaintext segment $m_n$ given by $m_n = f(Dec(C, sk_n), m_{n+1})$ and sends the plaintext segment $m_n$ to the segment storage apparatus which records the secret-key segment $sk_{n-1}$;

a first decryption step ($S210_1$) in which the segment storage apparatus ($200_1$) which records the secret-key segment $sk_1$ uses a plaintext segment $m_2$ obtained from the segment storage apparatus which records the secret-key segment $sk_2$ and the secret-key segment $sk_1$ to obtain plaintext M given by $M = f(Dec(C, sk_1), m_2)$; and
a secret-key segment changing step ($S121_n$, $S122_n$, $S123$, $S124$) in which each of the segment storage apparatuses obtains a set of secret-key segments ($sk_1', ..., sk_N'$) that satisfies

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

and that differs from ($sk_1, ..., sk_N$) and changes the secret-key segment $sk_n$ recorded in the segment storage apparatus to $sk_n'$,
**characterized in that**
the secret-key segment changing step obtains, periodically or under a predetermined condition, the set of secret-key segments ($sk_1', ..., sk_N'$);
the relationship

$$C = \{C_1, C_2\} = \{rP, M \times e(P_{ID}, rQ)\}$$

$$M = Dec(C, S_{ID}) = C_2 \times e(S_{ID}, C_1)^{-1}$$

is satisfied, where $\{P_{ID}, P, Q\}$ is the public key PK, $S_{ID}$ is the secret key SK and an integer greater than or equal to 1 and less than or equal to q-1, $S_{ID} = sP_{ID}$, $Q = sP$, r is a random number and an integer greater than or equal to 0 and less than or equal to q-1, $P_{ID}$ is a point on an elliptic curve of order q transformed from ID by using a hash function; P is the generator of a subgroup on the elliptic curve; s is the master secret key; e(,) represents pairing on the elliptic curve, M is a plaintext, and C is the ciphertext; and the functions g and f are defined as

$$g(sk_1, ..., sk_N) = sk_1 + ... + sk_N \bmod q$$

$$f(Dec(C, sk_n), m_{n+1})$$
$$= (Dec(C, sk_n) \times m_{n+1})/C_2.$$

**Patentansprüche**

1. Segmentspeichereinrichtung ($100_n$) von N Segmentspeichereinrichtungen ($100_1$, $100_N$), die jeweils Geheimschlüsselsegmente $sk_1$, ..., $sk_N$ aufzeichnen, erhalten durch Segmentieren eines Geheimschlüssels SK, der einem öffentlichen Schlüssel PK entspricht, in einem Speichersystem für segmentierte Geheimschlüssel, wobei die Beziehung

$$Dec(C, SK) = Dec(C, g(sk_1, ..., sk_N))$$
$$= f(Dec(C, sk_1), ..., Dec(C, sk_N))$$

erfüllt ist, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1$, ..., $sk_N$ ist und $f(m_1, ..., m_N)$ eine Funktion von $m_1$, ..., $m_N$ ist; die Segmentspeichereinrichtungen ($100_n$) umfassend:

eine Entschlüsselungseinheit ($110_n$), die angepasst ist, um das in der Segmentspeichereinrichtung aufgezeichnete Geheimschlüsselsegment $sk_n$ zu verwenden, um ein durch $m_n = Dec(C, sk_n)$ gegebenes Klartextsegment $m_n$ zu erhalten und das Klartextsegment $m_n$ an eine Kombiniervorrichtung zu senden; und
eine Geheimschlüsselsegmentänderungseinheit ($120_n$), die angepasst ist, um das Geheimschlüsselsegment $sk_n$ bis $sk_n$' zu ändern, so dass ein Satz von Geheimschlüsselsegmenten ($sk_1$', ..., $sk_N$') erhalten wird, der

$$Dec(C, SK) = Dec(C, g(sk_1', ..., sk_N'))$$
$$= f(Dec(C, sk_1'), ..., Dec(C, sk_N'))$$

erfüllt und sich von ($sk_1$, ..., $sk_N$) unterscheidet,
**dadurch gekennzeichnet, dass**
die Geheimschlüsselsegmentänderungseinheit ($120_n$) angepasst ist, um die Geheimschlüsselsegmente $sk_n$ bis $sk_n$' periodisch oder unter einer vorbestimmten Bedingung zu ändern;
die Beziehung

$$C = \{C_1, C_2\} = \{G^r, MH^r\}$$

$$M = Dec(C, x) = C_2/(C_1^x)$$

erfüllt ist, wobei {G, H} der öffentliche Schlüssel PK ist, x der Geheimschlüssel SK und eine Ganzzahl größer oder gleich 0 und kleiner oder gleich q-1 ist, H = G^x, r eine Zufallszahl und eine Ganzzahl größer oder gleich 0 und kleiner oder gleich q-1 ist, q die Ordnung einer zyklischen Gruppe ist, G der Generator der zyklischen Gruppe ist, M ein Klartext und ein Element der zyklischen Gruppe ist, C der Chiffretext und ein Element der zyklischen Gruppe ist und ^ ein Symbol ist, das eine Potenz darstellt; und
die Funktionen g und f definiert sind als

```
g(sk₁', ..., sk_N') = sk₁ + … + sk_N mod q
```

```
f(Dec(C, sk₁), …, Dec(C, sk_N))
= Dec(C, sk₁) x ... x Dec(C, sk_N)/(C₂^(N-1)).
```

2.  Segmentspeichereinrichtung (200$_n$) von N Segmentspeichereinrichtungen (200$_1$, ..., 200$_N$), die jeweils Geheimschlüsselsegmente sk$_1$, ..., sk$_N$ aufzeichnen, erhalten durch Segmentieren eines Geheimschlüssels SK, der einem öffentlichen Schlüssel PK entspricht, in einem Speichersystem für segmentierte Geheimschlüssel, wobei die Beziehungen

```
Dec(C, SK) = Dec(C, g(sk₁, ..., sk_N))
```

```
m_N = Dec(C, sk_N)
```

```
m_n = f(Dec(C, sk_n), m_n+1)
```

```
M = m₁
```

erfüllt sind, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, g(sk$_1$, ... , sk$_N$) eine Funktion von sk$_1$, ... , sk$_N$ ist und f (Dec (C, sk$_n$), m$_{n+1}$) eine Funktion von Dec (C, sk$_n$) und m$_{n+1}$ ist;
die Segmentspeichereinrichtung (200$_n$) umfassend:

eine Entschlüsselungseinheit (210$_n$), die angepasst ist, um das Geheimschlüsselsegment sk$_N$ zu verwenden, um ein durch m$_N$ = Dec(C, sk$_N$) gegebenes Klartextsegment m$_N$ zu erhalten und das Klartextsegment m$_N$ an die Segmentspeichereinrichtung zu senden, die das Geheimschlüsselsegment sk$_{N-1}$ aufzeichnet, wenn das Geheimschlüsselsegment sk$_N$ aufgezeichnet ist, um ein Klartextsegment m$_2$ zu verwenden, das von der Segmentspeichereinrichtung erhalten wird, die das Geheimschlüsselsegment sk$_2$ und das Geheimschlüsselsegment sk$_1$ aufzeichnet, um den durch M = f(Dec(C, sk$_1$), m$_2$) gegebenen Klartext M zu erhalten, wenn das Geheimschlüsselsegment sk$_1$ aufgezeichnet ist, und um ein Klartextsegment m$_{n+1}$ zu verwenden, das von der Segmentspeichereinrichtung erhalten wird, die das Geheimschlüsselsegment sk$_{n+1}$ und das Geheimschlüsselsegment sk$_n$ aufzeichnet, um ein durch m$_n$ = f (Dec (C, sk$_n$), m$_{n+1}$) gegebenes Klartextsegment m$_n$ zu erhalten und das Klartextsegment m$_n$ an die Segmentspeichereinrichtung zu senden, die das Geheimschlüsselsegment sk$_{n-1}$ aufzeichnet, wenn N nicht kleiner als 3 ist und das Geheimschlüsselsegment sk$_n$ (n ist 2 bis N-1) aufgezeichnet ist; und
eine Geheimschlüsselsegmentänderungseinheit (120$_n$), die angepasst ist, um das Geheimschlüsselsegment sk$_n$ bis sk$_n$' zu ändern, so dass ein Satz von Geheimschlüsselsegmenten (sk$_1$', ... sk$_N$') erhalten wird, der

```
Dec(C, SK) = Dec(C, g(sk₁', ... , sk_N'))
```

```
m_N = Dec(C, sk_N')
```

$$m_n = f(Dec(C, sk_n'), m_{n+1})$$

$$M = m_1$$

erfüllt und sich von $(sk_1, \dots ; sk_N)$ unterscheidet,
**dadurch gekennzeichnet, dass**
die Geheimschlüsselsegmentänderungseinheit $(120_n)$ angepasst ist, um die Geheimschlüsselsegmente $sk_n$ bis $sk_n'$ periodisch oder unter einer vorbestimmten Bedingung zu ändern;
die Beziehung

$$C = \{C_1, C_2\} = \{G^\wedge r, MH^\wedge r\}$$

$$M = Dec(C, x) = C_2/(C_1^\wedge x)$$

erfüllt ist, wobei {G, H} der öffentliche Schlüssel PK ist, x der Geheimschlüssel SK und eine Ganzzahl größer oder gleich 0 und kleiner oder gleich q-1 ist, H = G^x, r eine Zufallszahl und eine Ganzzahl größer oder gleich 0 und kleiner oder gleich q-1 ist, q die Ordnung einer zyklischen Gruppe ist, G der Generator der zyklischen Gruppe ist, M ein Klartext und ein Element der zyklischen Gruppe ist, C der Chiffretext und ein Element der zyklischen Gruppe ist und ^ ein Symbol ist, das eine Potenz darstellt; und
die Funktionen g und f definiert sind als

$$g(sk_1, \dots, sk_N) = sk_1 + \dots + sk_N \bmod q$$

$$f(Dec(C, sk_n), m_{n+1})$$
$$= (Dec(C, sk_n) \times m_{n+1})/C_2.$$

3.  Segmentspeichereinrichtung $(100_n)$ von N Segmentspeichereinrichtungen $(100_1, \dots, 100_N)$, die jeweils Geheimschlüsselsegmente $sk_1$, $sk_N$ aufzeichnen, erhalten durch Segmentieren eines Geheimschlüssels SK, der einem öffentlichen Schlüssel PK entspricht, in einem Speichersystem für segmentierte Geheimschlüssel,
wobei die Beziehung

$$Dec(C, SK) = Dec(C, g(sk_1, \dots, sk_N))$$
$$= f(Dec(C, sk_1), \dots, Dec(C, sk_N))$$

erfüllt ist, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, \dots, sk_N)$ eine Funktion von $sk_1, \dots, sk_N$ ist und f $(m_1, \dots, m_N)$ eine Funktion von $m_1, \dots, m_N$ ist;
die Segmentspeichereinrichtung $(100_n)$ umfassend:

eine Entschlüsselungseinheit $(110_n)$, die angepasst ist, um das in der Segmentspeichereinrichtung aufgezeichnete Geheimschlüsselsegment $sk_n$ zu verwenden, um ein durch $m_n = Dec(C, sk_n)$ gegebenes Klartextsegment $m_n$ zu erhalten und das Klartextsegment $m_n$ an eine Kombiniervorrichtung zu senden; und
eine Geheimschlüsselsegmentänderungseinheit $(120_n)$, die angepasst ist, um das Geheimschlüsselsegment $sk_n$ bis $sk_n'$ zu ändern, so dass ein Satz von Geheimschlüsselsegmenten $(sk_1', \dots, sk_N')$

$$Dec(C, SK) = Dec(C, g(sk_1', \dots, sk_N'))$$
$$= f(Dec(C, sk_1'), \dots, Dec(C, sk_N'))$$

erfüllt und sich von $(sk_1, ..., sk_N)$ unterscheidet,
**dadurch gekennzeichnet, dass**
die Geheimschlüsselsegmentänderungseinheit $(120_n)$ angepasst ist, um die Geheimschlüsselsegmente $sk_n$ bis $sk_n'$ periodisch oder unter einer vorbestimmten Bedingung zu ändern;
die Beziehung

$$C = \{C_1, C_2\} = \{rG, M+rH\}$$

$$M = Dec(C, x) = C_2 - xC_1$$

erfüllt ist, wobei {G, H} der öffentliche Schlüssel PK ist, x der Geheimschlüssel SK und eine Ganzzahl größer oder gleich 1 und kleiner oder gleich q-1 ist, H = xG, r eine Zufallszahl und eine Ganzzahl größer oder gleich 0 und kleiner oder gleich q-1 ist, q die Ordnung eines Basispunkts G auf der elliptischen Kurve ist, M ein Klartext ist und C der Chiffretext ist; und
die Funktionen g und f definiert sind als

$$g(sk_1, ..., sk_N) = sk_1 + ... + sk_N \bmod q$$

$$f(Dec(C, sk_1), ..., Dec(C, sk_N))$$
$$= Dec(C, sk_1) + ... + Dec(C, sk_N) - (N-1)C_2.$$

4. Segmentspeichereinrichtung $(200_n)$ von N Segmentspeichereinrichtungen $(200_1, ..., 200_N)$, die jeweils Geheimschlüsselsegmente $sk_1, ..., sk_N$ aufzeichnen, erhalten durch Segmentieren eines Geheimschlüssels SK, der einem öffentlichen Schlüssel PK entspricht, in einem Speichersystem für segmentierte Geheimschlüssel, wobei die Beziehungen

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

erfüllt sind, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1, ..., sk_N$ ist und $f(Dec(C, sk_n), m_{n+1})$ eine Funktion von $Dec(C, sk_n)$ und $m_{n+1}$ ist;
die Segmentspeichereinrichtung $(200_n)$ umfassend:

eine Entschlüsselungseinheit $(210_n)$, die angepasst ist, um das Geheimschlüsselsegment $sk_N$ zu verwenden, um ein durch $m_N = Dec(C, sk_N)$ gegebenes Klartextsegment $m_N$ zu erhalten und das Klartextsegment $m_N$ an die Segmentspeichereinrichtung zu senden, die das Geheimschlüsselsegment $sk_{N-1}$ aufzeichnet, wenn das Geheimschlüsselsegment $sk_N$ aufgezeichnet ist, um ein Klartextsegment $m_2$ zu verwenden, das von der Segmentspeichereinrichtung erhalten wird, die das Geheimschlüsselsegment $sk_2$ und das Geheimschlüsselsegment $sk_1$ aufzeichnet, um den durch $M = f(Dec(C, sk_1), m_2)$ gegebenen Klartext M zu erhalten, wenn das Geheimschlüsselsegment $sk_1$ aufgezeichnet ist, und um ein Klartextsegment $m_{n+1}$ zu verwenden, das von der Segmentspeichereinrichtung erhalten wird, die das Geheimschlüsselsegment $sk_{n+1}$ und das Geheimschlüsselsegment $sk_n$ aufzeichnet, um ein durch $m_n = f(Dec(C, sk_n), m_{n+1})$ gegebenes Klartextsegment $m_n$ zu erhalten

und das Klartextsegment $m_n$ an die Segmentspeichereinrichtung zu senden, die das Geheimschlüsselsegment $sk_{n-1}$ aufzeichnet, wenn N nicht kleiner als 3 ist und das Geheimschlüsselsegment $sk_n$ (n ist 2 bis N -1) aufgezeichnet ist; und

eine Geheimschlüsselsegmentänderungseinheit ($120_n$), die angepasst ist, um das Geheimschlüsselsegment $sk_n$ bis $sk_n'$ zu ändern, so dass ein Satz von Geheimschlüsselsegmenten ($sk_1'$, ..., $sk_N'$)

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

erfüllt und sich von ($sk_1$, ..., $sk_N$) unterscheidet,
**dadurch gekennzeichnet, dass**
die Geheimschlüsselsegmentänderungseinheit ($120_n$) angepasst ist, um die Geheimschlüsselsegmente $sk_n$ bis $sk_n'$ periodisch oder unter einer vorbestimmten Bedingung zu ändern;
die Beziehung

$$C = \{C_1, C_2\} = \{rG, M+rH\}$$

$$M = Dec(C, x) = C_2 - xC_1$$

erfüllt ist, wobei {G, H} der öffentliche Schlüssel PK ist, x der Geheimschlüssel SK und eine Ganzzahl größer oder gleich 1 und kleiner oder gleich q-1 ist, H = xG, r eine Zufallszahl und eine Ganzzahl größer oder gleich 0 und kleiner oder gleich q-1 ist, q die Ordnung eines Basispunkts G auf der elliptischen Kurve ist, M ein Klartext ist und C der Chiffretext ist; und
die Funktionen g und f definiert sind als

$$g(sk_1, ..., sk_N) = sk_1 + ... + sk_N \bmod q$$

$$f(Dec(C, sk_n), m_{n+1})$$
$$= Dec(C, sk_n) + m_{n+1} - C_2.$$

5. Segmentspeichereinrichtung ($100_n$) von N Segmentspeichereinrichtungen ($100_1$, ..., $100_N$), die jeweils Geheimschlüsselsegmente $sk_1$, ..., $sk_N$ aufzeichnen, erhalten durch Segmentieren eines Geheimschlüssels SK, der einem öffentlichen Schlüssel PK entspricht, in einem Speichersystem für segmentierte Geheimschlüssel, wobei die Beziehung

$$Dec(C, SK) = Dec(C, g(sk_1, ..., sk_N))$$
$$= f(Dec(C, sk_1), ..., Dec(C, sk_N))$$

erfüllt ist, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1$, ..., $sk_N$ ist und $f(m_1, ..., m_N)$ eine Funktion von $m_1$, ..., $m_N$ ist;
die Segmentspeichereinrichtung ($100_n$) umfassend:

eine Entschlüsselungseinheit ($110_n$), die angepasst ist, um das in der Segmentspeichereinrichtung aufgezeichnete Geheimschlüsselsegment $sk_n$ zu verwenden, um ein durch $m_n = Dec(C, sk_n)$ gegebenes Klartextsegment $m_n$ zu erhalten und das Klartextsegment $m_n$ an eine Kombiniervorrichtung zu senden; und

eine Geheimschlüsselsegmentänderungseinheit ($120_n$), die angepasst ist, um das Geheimschlüsselsegment $sk_n$ bis $sk_n'$ zu ändern, so dass ein Satz von Geheimschlüsselsegmenten ($sk_1'$, ..., $sk_N'$)

$$Dec(C, SK) = Dec(C, g(sk_1', ..., sk_N'))$$

$$= f(Dec(C, sk_1'), ..., Dec(C, sk_N'))$$

erfüllt und sich von ($sk_1$, ..., $sk_N$) unterscheidet,
**dadurch gekennzeichnet, dass**
die Geheimschlüsselsegmentänderungseinheit ($120_n$) angepasst ist, um die Geheimschlüsselsegmente $sk_n$ bis $sk_n'$ periodisch oder unter einer vorbestimmten Bedingung zu ändern;
die Beziehung

$$C = \{C_1, C_2\} = \{rP, Mxe(P_{ID}, rQ)\}$$

$$M = Dec(C, S_{ID}) = C_2xe(S_{ID}, C_1)^{-1}$$

erfüllt ist, wobei $\{P_{ID}, P, Q\}$ der öffentliche Schlüssel PK ist, $S_{ID}$ der Geheimschlüssel SK und eine Ganzzahl größer oder gleich 1 und kleiner oder gleich q-1 ist, $S_{ID}= sP_{ID}$, $Q = sP$, r eine Zufallszahl und eine Ganzzahl größer oder gleich 0 und kleiner oder gleich q-1 ist, $P_{ID}$ ein Punkt auf einer elliptischen Kurve der Ordnung q ist, transformiert von ID unter Verwendung einer Hash-Funktion; P der Generator einer Untergruppe auf der elliptischen Kurve ist; s der Master-Geheimschlüssel ist; e( , ) eine Paarung auf der elliptischen Kurve darstellt, M ein Klartext ist, C der Chiffretext ist und ^ ein Symbol ist, das eine Potenz darstellt; und
die Funktionen g und f definiert sind als

$$g(sk_1, ... , sk_N) = sk_1 + ... + sk_N \bmod q$$

$$f(Dec(C, sk_1), ... , Dec(C, sk_N))$$

$$= Dec(C, sk_1) x ... x Dec(C, sk_N)/(C_2{}^{\wedge}(N-1)).$$

**6.** Segmentspeichereinrichtung ($200_n$) von N Segmentspeichereinrichtungen ($200_1$, ..., $200_N$), die jeweils Geheimschlüsselsegmente $sk_1$, ..., $sk_N$ aufzeichnen, erhalten durch Segmentieren eines Geheimschlüssels SK, der einem öffentlichen Schlüssel PK entspricht, in einem Speichersystem für segmentierte Geheimschlüssel,
wobei die Beziehungen

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

erfüllt sind, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1$, ..., $sk_N$ ist und $f(Dec(C, sk_n), m_{n+1})$ eine Funktion von $Dec(C, sk_n)$

und $m_{n+1}$ ist;
die Segmentspeichereinrichtung ($200_n$) umfassend:

eine Entschlüsselungseinheit ($210_n$), die angepasst ist, um das Geheimschlüsselsegment $sk_N$ zu verwenden, um ein durch $m_N = Dec(C, sk_N)$ gegebenes Klartextsegment $m_N$ zu erhalten und das Klartextsegment $m_N$ an die Segmentspeichereinrichtung zu senden, die das Geheimschlüsselsegment $sk_{N-1}$ aufzeichnet, wenn das Geheimschlüsselsegment $sk_N$ aufgezeichnet ist, um ein Klartextsegment $m_2$ zu verwenden, das von der Segmentspeichereinrichtung erhalten wird, die das Geheimschlüsselsegment $sk_2$ und das Geheimschlüsselsegment $sk_1$ aufzeichnet, um den durch $M = f(Dec(C, sk_1), m_2)$ gegebenen Klartext M zu erhalten, wenn das Geheimschlüsselsegment $sk_1$ aufgezeichnet ist, und um ein Klartextsegment $m_{n+1}$ zu verwenden, das von der Segmentspeichereinrichtung erhalten wird, die das Geheimschlüsselsegment $sk_{n+1}$ und das Geheimschlüsselsegment $sk_n$ aufzeichnet, um ein durch $m_n = f(Dec(C, skn), m_{n+1})$ gegebenes Klartextsegment $m_n$ zu erhalten und das Klartextsegment $m_n$ an die Segmentspeichereinrichtung zu senden, die das Geheimschlüsselsegment $sk_{n-1}$ aufzeichnet, wenn N nicht kleiner als 3 ist und das Geheimschlüsselsegment $sk_n$ (n ist 2 bis N-1) aufgezeichnet ist; und
eine Geheimschlüsselsegmentänderungseinheit ($120_n$), die angepasst ist, um das Geheimschlüsselsegment $sk_n$ bis $sk_n'$ zu ändern, so dass ein Satz von Geheimschlüsselsegmenten ($sk_1'$, ..., $sk_N'$)

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

erfüllt und sich von ($sk_1$, ..., $sk_N$) unterscheidet,
**dadurch gekennzeichnet, dass**
die Geheimschlüsselsegmentänderungseinheit ($120_n$) angepasst ist, um die Geheimschlüsselsegmente $sk_n$ bis $sk_n'$ periodisch oder unter einer vorbestimmten Bedingung zu ändern;
die Beziehung

$$C = \{C_1, C_2\} = \{rP, Mxe(P_{ID}, rQ)\}$$

$$M = Dec(C, S_{ID}) = C_2 xe(S_{ID}, C_1)^{-1}$$

erfüllt ist, wobei $\{P_{ID}, P, Q\}$ der öffentliche Schlüssel PK ist, $S_{ID}$ der Geheimschlüssel SK und eine Ganzzahl größer oder gleich 1 und kleiner oder gleich q-1 ist, $S_{ID} = sP_{ID}$, $Q = sP$, r eine Zufallszahl und eine Ganzzahl größer oder gleich 0 und kleiner oder gleich q-1 ist, $P_{ID}$ ein Punkt auf einer elliptischen Kurve der Ordnung q ist, transformiert von ID unter Verwendung einer Hash-Funktion; P der Generator einer Untergruppe auf der elliptischen Kurve ist; s der Master-Geheimschlüssel ist; e( , ) eine Paarung auf der elliptischen Kurve darstellt, M ein Klartext ist und C der Chiffretext ist; und
die Funktionen g und f definiert sind als

$$g(sk_1, ..., sk_N) = sk_1 + ... + sk_N \bmod q$$

$$f(Dec(C, sk_n), m_{n+1})$$
$$= (Dec(C, sk_n) \times m_{n+1})/C_2.$$

7.  Speicherverfahren für segmentierte Geheimschlüssel unter Verwendung von:

    N Segmentspeichereinrichtungen ($100_1$, $100_N$), die jeweils Geheimschlüsselsegmente $sk_1$, ..., $sk_N$ aufzeichnen, die durch Segmentieren eines Geheimschlüssels SK, der einem öffentlichen Schlüssel PK entspricht, erhalten werden, und
    einer Kombiniervorrichtung (130), die einen Klartext M erhält, der dem Chiffretext C entspricht;
    die Beziehung

    $$Dec(C, SK) = Dec(C, g(sk_1, ..., sk_N))$$
    $$= f(Dec(C, sk_1), ..., Dec(C, sk_N))$$

    ist erfüllt, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1$, ..., $sk_N$ ist und $f(m_1, ..., m_N)$ eine Funktion von $m_1$, ..., $m_N$ ist; das Speicherverfahren für segmentierte Geheimschlüssel umfassend:

    einen Entschlüsselungsschritt ($S110_n$), in dem jede der Segmentspeichereinrichtungen das Geheimschlüsselsegment $sk_n$ verwendet, das in der Segmentspeichereinrichtung ($100_n$) aufgezeichnet ist, um ein durch $m_n = Dec(C, sk_n)$ gegebenes Klartextsegment $m_n$ zu erhalten, und das Klartextsegment $m_n$ an die Kombiniervorrichtung sendet;
    einen Kombinierschritt (S130), in dem die Kombiniervorrichtung den durch $M = f(m_1, ..., m_N)$ gegebenen Klartext M erhält; und
    einen Geheimschlüsselsegmentänderungsschritt ($S121_n$, $S122_n$, S123, S124), in dem die Segmentspeichereinrichtung einen Satz von Geheimschlüsselsegmenten ($sk_1'$, ..., $sk_N'$) erhält, der

    $$Dec(C, SK) = Dec(C, g(sk_1', ..., sk_N'))$$
    $$= f(Dec(C, sk_1'), ..., Dec(C, sk_N'))$$

    erfüllt und der sich von ($sk_1$, ..., $sk_N$) unterscheidet und das in der Segmentspeichereinrichtung aufgezeichnete Geheimschlüsselsegment skn zu $sk_n'$ ändert,
    **dadurch gekennzeichnet, dass**
    der Geheimschlüsselsegmentänderungsschritt periodisch oder unter einer vorbestimmten Bedingung den Satz von Geheimschlüsselsegmenten ($sk_1'$, ..., $sk_N'$) erhält;
    die Beziehung

    $$C = \{C_1, C_2\} = \{G\char`^r, MH\char`^r\}$$

    $$M = Dec(C, x) = C_2/(C_1\char`^x)$$

    erfüllt ist, wobei {G, H} der öffentliche Schlüssel PK ist, x der Geheimschlüssel SK und eine Ganzzahl größer oder gleich 0 und kleiner oder gleich q-1 ist, H = G^x, r eine Zufallszahl und eine Ganzzahl größer oder gleich 0 und kleiner oder gleich q-1 ist, q die Ordnung einer zyklischen Gruppe ist, G der Generator der zyklischen Gruppe ist, M ein Klartext und ein Element der zyklischen Gruppe ist, C der Chiffretext und ein Element der zyklischen Gruppe ist und ^ ein Symbol ist, das eine Potenz darstellt; und
    die Funktionen g und f definiert sind als $g(sk_1, ..., sk_N) = sk_1 + ... + sk_N \bmod q$

    $$f(Dec(C, sk_1), ..., Dec(C, sk_N))$$
    $$= Dec(C, sk_1) \times ... \times Dec(C, sk_N)/(C_2\char`^(N-1)).$$

8.  Speicherverfahren für segmentierte Geheimschlüssel unter Verwendung von N Segmentspeichereinrichtungen ($200_1$, ..., $200_N$), die jeweils Geheimschlüsselsegmente $sk_1$, ..., $sk_N$ aufzeichnen, erhalten durch Segmentieren eines Geheimschlüssels SK, der einem öffentlichen Schlüssel PK entspricht,

wobei die Beziehungen

$$\mathrm{Dec(C,\ SK)\ =\ Dec(C,\ g(sk_1,\ \ldots\ ,\ sk_N))}$$

$$\mathrm{m_N\ =\ Dec(C,\ sk_N)}$$

$$\mathrm{m_n\ =\ f(Dec(C,\ sk_n),\ m_{n+1})}$$

$$\mathrm{M\ =\ m_1}$$

erfüllt sind, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, \ldots , sk_N)$ eine Funktion von $sk_1, \ldots , sk_N$ ist und $f(Dec(C, sk_n), m_{n+1})$ eine Funktion von $Dec(C, sk_n)$ und $m_{n+1}$ ist;

das Speicherverfahren für segmentierte Geheimschlüssel umfassend:

einen N-ten Entschlüsselungsschritt ($S210_N$), in dem die Segmentspeichereinrichtung ($200_N$), die das Geheimschlüsselsegment $sk_N$ aufzeichnet, das Geheimschlüsselsegment $sk_N$ verwendet, um ein durch $m_N = Dec(C, sk_N)$ gegebenes Klartextsegment $m_N$ zu erhalten, und das Klartextsegment $m_N$ an die Segmentspeichereinrichtung sendet, die das Geheimschlüsselsegment $sk_{N-1}$ aufzeichnet;

einen n-ten Entschlüsselungsschritt ($S210_n$), in dem, falls N nicht weniger als 3 ist, die Segmentspeichereinrichtung ($200_n$), die das Geheimschlüsselsegment $sk_n$ (n ist 2 bis N-1) aufzeichnet, ein Klartextsegment $m_{n+1}$ verwendet, das von der Segmentspeichereinrichtung erhalten wird, die das Geheimschlüsselsegment $sk_{n+1}$ und das Geheimschlüsselsegment $sk_n$ aufzeichnet, um ein durch $m_n = f(Dec(C, sk_n), m_{n+1})$ gegebenes Klartextsegment $m_n$ zu erhalten, und das Klartextsegment $m_n$ an die Segmentspeichereinrichtung sendet, die das Geheimschlüsselsegment $sk_{n-1}$ aufzeichnet;

einen ersten Entschlüsselungsschritt ($S210_1$), in dem die Segmentspeichereinrichtung ($200_1$), die das Geheimschlüsselsegment $sk_1$ aufzeichnet, ein Klartextsegment $m_2$ verwendet, das von der Segmentspeichereinrichtung erhalten wird, die das Geheimschlüsselsegment $sk_2$ und das Geheimschlüsselsegment $sk_1$ aufzeichnet, um den durch $M = f(Dec(C, sk_1), m_2)$ gegebenen Klartext M zu erhalten; und

einen Geheimschlüsselsegmentänderungsschritt ($S121_n$, $S122_n$, $S123$, $S124$), in dem jede der Segmentspeichereinrichtungen einen Satz von Geheimschlüsselsegmenten ($sk_1'$, ..., $sk_N'$) erhält, der

$$\mathrm{Dec(C,\ SK)\ =\ Dec(C,\ g(sk_1',\ \ldots,\ sk_N'))}$$

$$\mathrm{m_N\ =\ Dec(C,\ sk_N')}$$

$$\mathrm{m_n\ =\ f(Dec(C,\ sk_n'),\ m_{n+1})}$$

$$\mathrm{M\ =\ m_1}$$

erfüllt und der sich von $(sk_1, \ldots, sk_N)$ unterscheidet und das in der Segmentspeichereinrichtung aufgezeichnete Geheimschlüsselsegment $sk_n$ zu $sk_n'$ ändert,
**dadurch gekennzeichnet, dass**
der Geheimschlüsselsegmentänderungsschritt periodisch oder unter einer vorbestimmten Bedingung den Satz von Geheimschlüsselsegmenten ($sk_1'$, ..., $sk_N'$) erhält;
die Beziehung

$$C = \{C_1, C_2\} = \{G^\wedge r, MH^\wedge r\}$$

$$M = \text{Dec}(C, x) = C_2/(C_1^\wedge x)$$

erfüllt ist, wobei {G, H} der öffentliche Schlüssel PK ist, x der Geheimschlüssel SK und eine Ganzzahl größer oder gleich 0 und kleiner oder gleich q-1 ist, H = G^x, r eine Zufallszahl und eine Ganzzahl größer oder gleich 0 und kleiner oder gleich q-1 ist, q die Ordnung einer zyklischen Gruppe ist, G der Generator der zyklischen Gruppe ist, M ein Klartext und ein Element der zyklischen Gruppe ist, C der Chiffretext und ein Element der zyklischen Gruppe ist und ^ ein Symbol ist, das eine Potenz darstellt; und
die Funktionen g und f definiert sind als

$$g(sk_1, \ldots, sk_N) = sk_1 + \ldots + sk_N \bmod q$$

$$f(\text{Dec}(C, sk_n), m_{n+1})$$

$$= (\text{Dec}(C, sk_n) \times m_{n+1})/C_2.$$

**9.** Speicherverfahren für segmentierte Geheimschlüssel unter Verwendung von:

N Segmentspeichereinrichtungen ($100_1$, $100_N$), die jeweils Geheimschlüsselsegmente $sk_1$, ..., $sk_N$ aufzeichnen, die durch Segmentieren eines Geheimschlüssels SK, der einem öffentlichen Schlüssel PK entspricht, erhalten werden, und
einer Kombiniervorrichtung (130), die einen Klartext M erhält, der dem Chiffretext C entspricht;
die Beziehung

$$\text{Dec}(C, SK) = \text{Dec}(C, g(sk_1, \ldots, sk_N))$$

$$= f(\text{Dec}(C, sk_1), \ldots, \text{Dec}(C, sk_N))$$

ist erfüllt, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, \ldots, sk_N)$ eine Funktion von $sk_1, \ldots, sk_N$ und $f(m_1, \ldots, m_N)$ eine Funktion von $m_1, \ldots, m_N$ ist;
das Speicherverfahren für segmentierte Geheimschlüssel umfassend:

einen Entschlüsselungsschritt ($S110_n$), in dem jede der Segmentspeichereinrichtungen das Geheimschlüsselsegment $sk_n$ verwendet, das in der Segmentspeichereinrichtung ($100_n$) aufgezeichnet ist, um ein durch $m_n = \text{Dec}(C, sk_n)$ gegebenes Klartextsegment $m_n$ zu erhalten, und das Klartextsegment $m_n$ an die Kombiniervorrichtung sendet;
einen Kombinierschritt (S130), in dem die Kombiniervorrichtung den durch $M = f(m_1, \ldots, m_N)$ gegebenen Klartext M erhält; und
einen Geheimschlüsselsegmentänderungsschritt ($S121_n$, $S122_n$, S123, S124), in dem die Segmentspeichereinrichtung einen Satz von Geheimschlüsselsegmenten ($sk_1'$, ..., $sk_N'$) erhält, der

$$\text{Dec}(C, SK) = \text{Dec}(C, g(sk_1', \ldots, sk_N'))$$

$$= f(\text{Dec}(C, sk_1'), \ldots, \text{Dec}(C, sk_N'))$$

erfüllt und der sich von ($sk_1$, ..., $sk_N$) unterscheidet und das in der Segmentspeichereinrichtung aufgezeichnete Geheimschlüsselsegment $sk_n$ zu $sk_n'$ ändert,
**dadurch gekennzeichnet, dass**
der Geheimschlüsselsegmentänderungsschritt periodisch oder unter einer vorbestimmten Bedingung den Satz von Geheimschlüsselsegmenten ($sk_1'$, ..., $sk_N'$) erhält;
die Beziehung

$$C = \{C_1, C_2\} = \{rG, M+rH\}$$

$$M = Dec(C, x) = C_2 - xC_1$$

erfüllt ist, wobei $\{G, H\}$ der öffentliche Schlüssel PK ist, $x$ der Geheimschlüssel SK und eine Ganzzahl größer oder gleich 1 und kleiner oder gleich $q-1$ ist, $H = xG$, $r$ eine Zufallszahl und eine Ganzzahl größer oder gleich 0 und kleiner oder gleich $q-1$ ist, $q$ die Ordnung eines Basispunkts G auf der elliptischen Kurve ist, M ein Klartext ist und C der Chiffretext ist; und
die Funktionen g und f definiert sind als

$$g(sk_1, \ldots, sk_N) = sk_1 + \ldots + sk_N \bmod q$$

$$f(Dec(C, sk_1), \ldots, Dec(C, sk_N))$$
$$= Dec(C, sk_1) + \ldots + Dec(C, sk_N) - (N-1)C_2.$$

**10.** Speicherverfahren für segmentierte Geheimschlüssel unter Verwendung von N Segmentspeichereinrichtungen $(200_1, \ldots, 200_N)$, die jeweils Geheimschlüsselsegmente $sk_1$, $sk_N$ aufzeichnen, erhalten durch Segmentieren eines Geheimschlüssels SK, der einem öffentlichen Schlüssel PK entspricht,
wobei die Beziehungen

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

erfüllt sind, wobei N eine Ganzzahl von nicht weniger als 2 ist, $n$ eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, \ldots, sk_N)$ eine Funktion von $sk_1, \ldots, sk_N$ ist und $f(Dec(C, sk_n), m_{n+1})$ eine Funktion von $Dec(C, sk_n)$ und $m_{n+1}$ ist;
das Speicherverfahren für segmentierte Geheimschlüssel umfassend:

einen N-ten Entschlüsselungsschritt $(S210_N)$, in dem die Segmentspeichereinrichtung $(200_N)$, die das Geheimschlüsselsegment $sk_N$ aufzeichnet, das Geheimschlüsselsegment $sk_N$ verwendet, um ein durch $m_N = Dec(C, sk_N)$ gegebenes Klartextsegment $m_N$ zu erhalten, und das Klartextsegment $m_N$ an die Segmentspeichereinrichtung sendet, die das Geheimschlüsselsegment $sk_{N-1}$ aufzeichnet;
einen n-ten Entschlüsselungsschritt $(S210_n)$, in dem, falls N nicht weniger als 3 ist, die Segmentspeichereinrichtung $(200_n)$, die das Geheimschlüsselsegment $sk_n$ (n ist 2 bis N-1) aufzeichnet, ein Klartextsegment $m_{n+1}$ verwendet, das von der Segmentspeichereinrichtung erhalten wird, die das Geheimschlüsselsegment $sk_{n+1}$ und das Geheimschlüsselsegment $sk_n$ aufzeichnet, um ein durch $m_n = f(Dec(C, sk_n), m_{n+1})$ gegebenes Klartextsegment $m_n$ zu erhalten, und das Klartextsegment $m_n$ an die Segmentspeichereinrichtung sendet, die das Geheimschlüsselsegment $sk_{n-1}$ aufzeichnet;
einen ersten Entschlüsselungsschritt $(S210_1)$, in dem die Segmentspeichereinrichtung $(200_1)$, die das Geheimschlüsselsegment $sk_1$ aufzeichnet, ein Klartextsegment $m_2$ verwendet, das von der Segmentspeichereinrichtung erhalten wird, die das Geheimschlüsselsegment $sk_2$ und das Geheimschlüsselsegment $sk_1$ aufzeichnet, um den durch $M = f(Dec(C, sk_1), m_2)$ gegebenen Klartext M zu erhalten; und
einen Geheimschlüsselsegmentänderungsschritt $(S121_n, S122_n, S123, S124)$, in dem jede der Segmentspeichereinrichtungen einen Satz von Geheimschlüsselsegmenten ($sk_1'$, ..., $sk_N'$) erhält, der

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

erfüllt und der sich von ($sk_1$, ..., $sk_N$) unterscheidet und das in der Segmentspeichereinrichtung aufgezeichnete Geheimschlüsselsegment $sk_n$ zu $sk_n'$ ändert,
**dadurch gekennzeichnet, dass**
der Geheimschlüsselsegmentänderungsschritt periodisch oder unter einer vorbestimmten Bedingung den Satz von Geheimschlüsselsegmenten ($sk_1'$, ..., $sk_N'$) erhält;
die Beziehung

$$C = \{C_1, C_2\} = \{rG, M+rH\}$$

$$M = Dec(C, x) = C_2 - xC_1$$

erfüllt ist, wobei {G, H} der öffentliche Schlüssel PK ist, x der Geheimschlüssel SK und eine Ganzzahl größer oder gleich 1 und kleiner oder gleich q-1 ist, H = xG, r eine Zufallszahl und eine Ganzzahl größer oder gleich 0 und kleiner oder gleich q-1 ist, q die Ordnung eines Basispunkts G auf der elliptischen Kurve ist, M ein Klartext ist und C der Chiffretext ist; und
die Funktionen g und f definiert sind als

$$g(sk_1, ..., sk_N) = sk_1 + ... + sk_N \bmod q$$

$$f(Dec(C, sk_n), m_{n+1})$$
$$= Dec(C, sk_n) + m_{n+1} - C_2.$$

11. Speicherverfahren für segmentierte Geheimschlüssel unter Verwendung von:

N Segmentspeichereinrichtungen ($100_1$, ..., $100_N$), die jeweils Geheimschlüsselsegmente $sk_1$, ..., $sk_N$ aufzeichnen, die durch Segmentieren eines Geheimschlüssels SK, der einem öffentlichen Schlüssel PK entspricht, erhalten werden, und
einer Kombiniervorrichtung (130), die einen Klartext M erhält, der dem Chiffretext C entspricht;
die Beziehung

$$Dec(C, SK) = Dec(C, g(sk_1, ..., sk_N))$$
$$= f(Dec(C, sk_1), ..., Dec(C, sk_N))$$

ist erfüllt, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1$, ..., $sk_N$ ist und $f(m_1, ..., m_N)$ eine Funktion von $m_1$, ..., $m_N$ ist; das Speicherverfahren für segmentierte Geheimschlüssel umfassend:

einen Entschlüsselungsschritt (S110$_n$), in dem jede der Segmentspeichereinrichtungen das Geheimschlüsselsegment sk$_n$ verwendet, das in der Segmentspeichereinrichtung (100$_n$) aufgezeichnet ist, um ein durch m$_n$ = Dec(C, sk$_n$) gegebenes Klartextsegment m$_n$ zu erhalten, und das Klartextsegment m$_n$ an die Kombiniervorrichtung sendet;

einen Kombinierschritt (S130), in dem die Kombiniervorrichtung den durch M = f(m$_1$, m$_N$) gegebenen Klartext M erhält; und

einen Geheimschlüsselsegmentänderungsschritt (S121$_n$, S122$_n$, S123, S124), in dem die Segmentspeichereinrichtung einen Satz von Geheimschlüsselsegmenten (sk$_1$', ..., sk$_N$') erhält, der

$$\mathtt{Dec(C, \ SK) \ = \ Dec(C, \ g(sk_1', \ ... \ , \ sk_N'))}$$

$$\mathtt{= \ f(Dec(C, \ sk_1'), \ ..., \ Dec(C, \ sk_N'))}$$

erfüllt und der sich von (sk$_1$, ..., sk$_N$) unterscheidet und das in der Segmentspeichereinrichtung aufgezeichnete Geheimschlüsselsegment sk$_n$ zu sk$_n$' ändert,

**dadurch gekennzeichnet, dass**

der Geheimschlüsselsegmentänderungsschritt periodisch oder unter einer vorbestimmten Bedingung den Satz von Geheimschlüsselsegmenten (sk$_1$', ..., sk$_N$') erhält;

die Beziehung

$$\mathtt{C \ = \ \{C_1, \ C_2\} \ = \ \{rP, \ Mxe(P_{ID}, \ rQ)\}}$$

$$\mathtt{M \ = \ Dec(C, \ S_{ID}) \ = \ C_2xe(S_{ID}, \ C_1)^{-1}}$$

erfüllt ist, wobei {P$_{ID}$, P, Q} der öffentliche Schlüssel PK ist, S$_{ID}$ der Geheimschlüssel SK und eine Ganzzahl größer oder gleich 1 und kleiner oder gleich q-1 ist, S$_{ID}$= sP$_{ID}$, Q = sP, r eine Zufallszahl und eine Ganzzahl größer oder gleich 0 und kleiner oder gleich q-1 ist, P$_{ID}$ ein Punkt auf einer elliptischen Kurve der Ordnung q ist, transformiert von ID unter Verwendung einer Hash-Funktion; P der Generator einer Untergruppe auf der elliptischen Kurve ist; s der Master-Geheimschlüssel ist; e( , ) eine Paarung auf der elliptischen Kurve darstellt, M ein Klartext ist, C der Chiffretext ist und ^ ein Symbol ist, das eine Potenz darstellt; und die Funktionen g und f definiert sind als

$$\mathtt{g(sk_1, \ ... \ , \ sk_N) \ = \ sk_1 \ + \ ... \ + \ sk_N \ mod \ q}$$

$$\mathtt{f(Dec(C, \ sk_1), \ ... \ , \ Dec(C, \ sk_N))}$$

$$\mathtt{= \ Dec(C, \ sk_1) \ x \ ... \ x \ Dec(C, \ sk_N)/(C_2{}^{\wedge}(N-1)).}$$

12. Speicherverfahren für segmentierte Geheimschlüssel unter Verwendung von N Segmentspeichereinrichtungen (200$_1$, ..., 200$_N$), die jeweils Geheimschlüsselsegmente sk$_1$, sk$_N$ aufzeichnen, erhalten durch Segmentieren eines Geheimschlüssels SK, der einem öffentlichen Schlüssel PK entspricht,

wobei die Beziehungen

$$\mathtt{Dec(C, \ SK) \ = \ Dec(C, \ g(sk_1, \ ..., \ sk_N))}$$

$$\mathtt{m_N \ = \ Dec(C, \ sk_N)}$$

$$\mathtt{m_n \ = \ f(Dec(C, \ sk_n), \ m_{n+1})}$$

$$\mathtt{M \ = \ m_1}$$

erfüllt sind, wobei N eine Ganzzahl von nicht weniger als 2 ist, n eine Ganzzahl größer oder gleich 1 und kleiner oder gleich N ist, Dec(C, SK) ein Symbol ist, das die Entschlüsselung des Chiffretexts C mit dem Geheimschlüssel SK darstellt, $g(sk_1, ..., sk_N)$ eine Funktion von $sk_1, ..., sk_N$ ist und $f(Dec(C, sk_n), m_{n+1})$ eine Funktion von $Dec(C, sk_n)$ und $m_{n+1}$ ist;

das Speicherverfahren für segmentierte Geheimschlüssel umfassend:

einen N-ten Entschlüsselungsschritt ($S210_N$), in dem die Segmentspeichereinrichtung ($200_N$), die das Geheimschlüsselsegment $sk_N$ aufzeichnet, das Geheimschlüsselsegment $sk_N$ verwendet, um ein durch $m_N = Dec(C, sk_N)$ gegebenes Klartextsegment $m_N$ zu erhalten, und das Klartextsegment $m_N$ an die Segmentspeichereinrichtung sendet, die das Geheimschlüsselsegment $sk_{N-1}$ aufzeichnet;

einen n-ten Entschlüsselungsschritt ($S210_n$), in dem, falls N nicht weniger als 3 ist, die Segmentspeichereinrichtung ($200_n$), die das Geheimschlüsselsegment $sk_n$ (n ist 2 bis N-1) aufzeichnet, ein Klartextsegment $m_{n+1}$ verwendet, das von der Segmentspeichereinrichtung erhalten wird, die das Geheimschlüsselsegment $sk_{n+1}$ und das Geheimschlüsselsegment $sk_n$ aufzeichnet, um ein durch $m_n = f(Dec(C, sk_n), m_{n+1})$ gegebenes Klartextsegment $m_n$ zu erhalten, und das Klartextsegment $m_n$ an die Segmentspeichereinrichtung sendet, die das Geheimschlüsselsegment $sk_{n-1}$ aufzeichnet;

einen ersten Entschlüsselungsschritt ($S210_1$), in dem die Segmentspeichereinrichtung ($200_1$), die das Geheimschlüsselsegment $sk_1$ aufzeichnet, ein Klartextsegment $m_2$ verwendet, das von der Segmentspeichereinrichtung erhalten wird, die das Geheimschlüsselsegment $sk_2$ und das Geheimschlüsselsegment $sk_1$ aufzeichnet, um den durch $M = f(Dec(C, sk_1), m_2)$ gegebenen Klartext M zu erhalten; und

einen Geheimschlüsselsegmentänderungsschritt ($S121_n$, $S122_n$, S123, S124), in dem jede der Segmentspeichereinrichtungen einen Satz von Geheimschlüsselsegmenten ($sk_1', ..., sk_N'$) erhält, der

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

erfüllt und der sich von ($sk_1, ..., sk_N$) unterscheidet und das in der Segmentspeichereinrichtung aufgezeichnete Geheimschlüsselsegment $sk_n$ zu $sk_n'$ ändert,

**dadurch gekennzeichnet, dass**

der Geheimschlüsselsegmentänderungsschritt periodisch oder unter einer vorbestimmten Bedingung den Satz von Geheimschlüsselsegmenten ($sk_1', ..., sk_N'$) erhält;

die Beziehung

$$C = \{C_1, C_2\} = \{rP, Mxe(P_{ID}, rQ)\}$$

$$M = Dec(C, S_{ID}) = C_2xe(S_{ID}, C_1)^{-1}$$

erfüllt ist, wobei $\{P_{ID}, P, Q\}$ der öffentliche Schlüssel PK ist, $S_{ID}$ der Geheimschlüssel SK und eine Ganzzahl größer oder gleich 1 und kleiner oder gleich q-1 ist, $S_{ID} = sP_{ID}$, Q = sP, r eine Zufallszahl und eine Ganzzahl größer oder gleich 0 und kleiner oder gleich q-1 ist, $P_{ID}$ ein Punkt auf einer elliptischen Kurve der Ordnung q ist, transformiert von ID unter Verwendung einer Hash-Funktion; P der Generator einer Untergruppe auf der elliptischen Kurve ist; s der Master-Geheimschlüssel ist; e( , ) eine Paarung auf der elliptischen Kurve darstellt, M ein Klartext ist und C der Chiffretext ist; und

die Funktionen g und f definiert sind als

$$g(sk_1, \ldots, sk_N) = sk_1 + \ldots + sk_N \bmod q$$

$$f(Dec(C, sk_n), m_{n+1})$$
$$= (Dec(C, sk_n) \times m_{n+1})/C_2.$$

**Revendications**

1. Appareil de stockage de segment $(100_n)$ de N appareils de stockage de segment $(100_1, ..., 100_N)$ qui enregistrent respectivement des segments de clé secrète $sk_1, ..., sk_N$ obtenus en segmentant une clé secrète SK correspondant à une clé publique PK, dans un système de stockage de clé secrète segmentée, la relation

$$Dec(C, SK) = Dec(C, g(sk_1, \ldots, sk_N))$$
$$= f(Dec(C, sk_1), \ldots, Dec(C, sk_N))$$

étant satisfaite, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, ..., sk_N)$ est une fonction de $sk_1, ..., sk_N$, et $f(m_1, ..., m_N)$ est une fonction de $m_1, ..., m_N$ ; les appareils de stockage de segment $(100_n)$ comprenant :

une unité de déchiffrement $(110_n)$ adaptée pour utiliser le segment de clé secrète $sk_n$ enregistré dans l'appareil de stockage de segment pour obtenir un segment de texte en clair $m_n$ donné par $m_n = Dec(C, sk_n)$ et envoyer le segment de texte en clair $m_n$ à un dispositif de combinaison ; et une unité de changement de segment de clé secrète $(120_n)$ adaptée pour changer le segment de clé secrète $sk_n$ en $sk_n'$ de sorte qu'un ensemble de segments de clé secrète $(sk_1', sk_N')$ soit obtenu qui satisfait à

$$Dec(C, SK) = Dec(C, g(sk_1', \ldots, sk_N'))$$
$$= f(Dec(C, sk_1'), \ldots, Dec(C, sk_N'))$$

et diffère de $(sk_1, sk_N)$,
**caractérisé en ce que** :

l'unité de changement de segment de clé secrète $(120_n)$ est adaptée pour changer, périodiquement ou dans une condition prédéterminée, les segments de clé secrète $sk_n$ en skn' ; la relation

$$C = \{C_1, C_2\} = \{G^\wedge r, MH^\wedge r\}$$

$$M = Dec(C, x) = C_2/(C_1^\wedge x)$$

est satisfaite, où {G, H} est la clé publique PK, x est la clé secrète SK et un entier supérieur ou égal à 0 et inférieur ou égal à q-1, H = G^x, r est un nombre aléatoire et un entier supérieur ou égal à 0 et inférieur ou égal à q-1, q est l'ordre d'un groupe cyclique, G est le générateur du groupe cyclique, M est un texte en clair et un élément du groupe cyclique, C est le texte chiffré et un élément du groupe cyclique, et ^ est un symbole représentant une puissance ; et les fonctions g et f sont définies comme :

$$g(sk_1, \ldots, sk_N) = sk_1 + \ldots + sk_N \bmod q$$

$$f(Dec(C, sk_1), \ldots, Dec(C, sk_N))$$
$$= Dec(C, sk_1) \times \ldots \times Dec(C, sk_N)/(C_2\verb|^|(N-1)).$$

2. Appareil de stockage de segment ($200_n$) de N appareils de stockage de segment ($200_1$, ..., $200_N$) qui enregistrent respectivement des segments de clé secrète $sk_1$, ..., $sk_N$ obtenus en segmentant une clé secrète SK correspondant à une clé publique PK, dans un système de stockage de clé secrète segmentée, les relations

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, \ldots, sk_N)$ est une fonction de $sk_1$, ..., $sk_N$, et $f(Dec(C, sk_n), m_{n+1})$ est une fonction de $Dec(C, sk_n)$ et $m_{n+1}$ ; l'appareil de stockage de segment ($200_n$) comprenant :

une unité de déchiffrement ($210_n$) adaptée pour utiliser le segment de clé secrète $sk_N$ pour obtenir un segment de texte en clair $m_N$ donné par $m_N = Dec(C, sk_N)$ et envoyer le segment de texte en clair $m_N$ à l'appareil de stockage de segment qui enregistre le segment de clé secrète $sk_{N-1}$ lorsque le segment de clé secrète $sk_N$ est enregistré, utiliser un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par M = $fDec(C, sk_1), m_2$) lorsque le segment de clé secrète $sk_1$ est enregistré, et utiliser un segment de texte en clair $m_{n+1}$ obtenu à partir de l'appareil de stockage de segment qui enregistre le segment de clé secrète $sk_{n+1}$ et le segment de clé secrète skn pour obtenir un segment de texte en clair $m_n$ donné par $m_n$ = f (Dec (C, $sk_n$), $m_{n+1}$) et envoyer le segment de texte en clair $m_n$ à l'appareil de stockage de segment qui enregistre le segment de clé secrète $sk_{n-1}$ lorsque N n'est pas inférieur à 3 et que le segment de clé secrète skn (n est 2 à N-1) est enregistré ; et une unité de changement de segment de clé secrète ($120_n$) adaptée pour changer le segment de clé secrète skn en $sk_n'$ de sorte qu'un ensemble de segments de clé secrète ($sk_1'$, ..., $sk_N'$) soit obtenu qui satisfait à

$$Dec(C, SK) = Dec(C, g(sk_1', \ldots, sk_N'))$$

$$m_N = Dec(C, sk_N')$$

$$m_n = f(Dec(C, sk_n'), m_{n+1})$$

$$M = m_1$$

et diffère de ($sk_1$, ..., $sk_N$),
**caractérisé en ce que** :

l'unité de changement de segment de clé secrète ($120_n$) est adaptée pour changer, périodiquement ou dans une condition prédéterminée, les segments de clé secrète skn en $sk_n'$ ;

la relation

$$C = \{C_1, C_2\} = \{G\wedge r, MH\wedge r\}$$

$$M = Dec(C, x) = C_2/(C_1\wedge x)$$

est satisfaite, où {G, H} est la clé publique PK, x est la clé secrète SK et un entier supérieur ou égal à 0 et inférieur ou égal à q-1, H = G^x, r est un nombre aléatoire et un entier supérieur ou égal à 0 et inférieur ou égal à q-1, q est l'ordre d'un groupe cyclique, G est le générateur du groupe cyclique, M est un texte en clair et un élément du groupe cyclique, C est le texte chiffré et un élément du groupe cyclique, et ^ est un symbole représentant une puissance ; et
les fonctions g et f sont définies comme :

$$g(sk_1, \ldots, sk_N) = sk_1 + \ldots + sk_N \bmod q$$

$$f(Dec(C, sk_n), m_{n+1})$$
$$= (Dec(C, sk_n) \times m_{n+1})/C_2.$$

3. Appareil de stockage de segment ($100_n$) de N appareils de stockage de segment ($100_1$, ..., $100_N$) qui enregistrent respectivement des segments de clé secrète $sk_1$, ..., $sk_N$ obtenus en segmentant une clé secrète SK correspondant à une clé publique PK, dans un système de stockage de clé secrète segmentée,
la relation

$$Dec(C, SK) = Dec(C, g(sk_1, \ldots, sk_N))$$
$$= f(Dec(C, sk_1), \ldots, Dec(C, sk_N))$$

étant satisfaite, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, \ldots, sk_N)$ est une fonction de $sk_1$, ..., $sk_N$, et $f(m_1, \ldots, m_N)$ est une fonction de $m_1$, ..., $m_N$ ;
l'appareil de stockage de segment ($100_n$) comprenant :

une unité de déchiffrement ($110_n$) adaptée pour utiliser le segment de clé secrète skn enregistré dans l'appareil de stockage de segment pour obtenir un segment de texte en clair $m_n$ donné par $m_n = Dec(C, sk_n)$ et envoyer le segment de texte en clair $m_n$ à un dispositif de combinaison ; et
une unité de changement de segment de clé secrète ($120_n$) adaptée pour changer le segment de clé secrète $sk_n$ en skn' de sorte qu'un ensemble de segments de clé secrète ($sk_1'$, ..., $sk_N'$) satisfasse à

$$Dec(C, SK) = Dec(C, g(sk_1', \ldots, sk_N'))$$
$$= f(Dec(C, sk_1'), \ldots, Dec(C, sk_N'))$$

et diffère de ($sk_1$, ..., $sk_N$),
**caractérisé en ce que** :

l'unité de changement de segment de clé secrète ($120_n$) est adaptée pour changer, périodiquement ou dans une condition prédéterminée, les segments de clé secrète $sk_n$ en $sk_n'$ ;
la relation

$$C = \{C_1, C_2\} = \{rG, M + rH\}$$

$$M = \text{Dec}(C, x) = C_2 - xC_1$$

est satisfaite, où {G, H} est la clé publique PK, x est la clé secrète SK et un entier supérieur ou égal à 1 et inférieur ou égal à q-1, H = xG, r est un nombre aléatoire et un entier supérieur ou égal à 0 et inférieur ou égal à q-1, q est l'ordre d'un point de base G sur la courbe elliptique, M est un texte en clair, et C est le texte chiffré ; et

les fonctions g et f sont définies comme :

$$g(sk_1, \ldots, sk_N) = sk_1 + \ldots + sk_N \bmod q$$

$$f(\text{Dec}(C, sk_1), \ldots, \text{Dec}(C, sk_N))$$
$$= \text{Dec}(C, sk_1) + \ldots + \text{Dec}(C, sk_N) - (N-1)C_2.$$

4.  Appareil de stockage de segment ($200_n$) de N appareils de stockage de segment ($200_1$, ..., $200_N$) qui enregistrent respectivement des segments de clé secrète $sk_1$, ..., $sk_N$ obtenus en segmentant une clé secrète SK correspondant à une clé publique PK, dans un système de stockage de clé secrète segmentée,
    les relations

$$\text{Dec}(C, SK) = \text{Dec}(C, g(sk_1, \ldots, sk_N))$$

$$m_N = \text{Dec}(C, sk_N)$$

$$m_n = f(\text{Dec}(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, \ldots, sk_N)$ est une fonction de $sk_1$, ..., $sk_N$, et $f(\text{Dec}(C, sk_n), m_{n+1})$ est une fonction de $\text{Dec}(C, sk_N)$ et $m_{n+1}$ ;
l'appareil de stockage de segment ($200_n$) comprenant :

une unité de déchiffrement ($210_n$) adaptée pour utiliser le segment de clé secrète $sk_N$ pour obtenir un segment de texte en clair $m_N$ donné par $m_N = \text{Dec}(C, sk_N)$ et envoyer le segment de texte en clair $m_N$ à l'appareil de stockage de segment qui enregistre le segment de clé secrète $sk_{N-1}$ lorsque le segment de clé secrète $sk_N$ est enregistré, utiliser un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par $M = f\text{Dec}(C, sk_1), m_2)$ lorsque le segment de clé secrète $sk_1$ est enregistré, et utiliser un segment de texte en clair $m_{n+1}$ obtenu à partir de l'appareil de stockage de segment qui enregistre le segment de clé secrète $sk_{n+1}$ et le segment de clé secrète skn pour obtenir un segment de texte en clair $m_n$ donné par $m_n = f(\text{Dec}(C, sk_n), m_{n+1})$ et envoyer le segment de texte en clair $m_n$ à l'appareil de stockage de segment qui enregistre le segment de clé secrète $sk_{n-1}$ lorsque N n'est pas inférieur à 3 et que le segment de clé secrète skn (n est 2 à N-1) est enregistré ; et
une unité de changement de segment de clé secrète ($120_n$) adaptée pour changer le segment de clé secrète skn en $sk_n$' de sorte qu'un ensemble de segments de clé secrète ($sk_1$', ..., $sk_N$') satisfasse à

$$\text{Dec}(C, SK) = \text{Dec}(C, g(sk_1', \ldots, sk_N'))$$

$$m_N = \text{Dec}(C, sk_N')$$

$$m_n = f(\text{Dec}(C, sk_n'), m_{n+1})$$

$$M = m_1$$

et diffère de $(sk_1, ..., sk_N)$,
**caractérisé en ce que** :

l'unité de changement de segment de clé secrète $(120_n)$ est adaptée pour changer, périodiquement ou dans une condition prédéterminée, les segments de clé secrète skn en $sk_n'$ ;
la relation

$$C = \{C_1, C_2\} = \{rG, M + rH\}$$

$$M = \text{Dec}(C, x) = C_2 - xC_1$$

est satisfaite, où $\{G, H\}$ est la clé publique PK, x est la clé secrète SK et un entier supérieur ou égal à 1 et inférieur ou égal à q-1, H = xG, r est un nombre aléatoire et un entier supérieur ou égal à 0 et inférieur ou égal à q-1, q est l'ordre d'un point de base G sur la courbe elliptique, M est un texte en clair, et C est le texte chiffré ; et
les fonctions g et f sont définies comme :

$$g(sk_1, ..., sk_N) = sk_1 + ... + sk_N \bmod q$$

$$f(\text{Dec}(C, sk_n), m_{n+1})$$
$$= \text{Dec}(C, sk_n) + m_{n+1} - C_2.$$

5. Appareil de stockage de segment $(100_n)$ de N appareils de stockage de segment $(100_1, ..., 100_N)$ qui enregistrent respectivement des segments de clé secrète $sk_1, ..., sk_N$ obtenus en segmentant une clé secrète SK correspondant à une clé publique PK, dans un système de stockage de clé secrète segmentée,
la relation

$$\text{Dec}(C, SK) = \text{Dec}(C, g(sk_1, ..., sk_N))$$
$$= f(\text{Dec}(C, sk_1), ..., \text{Dec}(C, sk_N))$$

étant satisfaite, où N est un entier non inférieur à 2, n est un entier supérieur ou égal à 1 et inférieur ou égal à N, $\text{Dec}(C, SK)$ est un symbole représentant le déchiffrement du texte chiffré C avec la clé secrète SK, $g(sk_1, ..., sk_N)$ est une fonction de $sk_1, ..., sk_N$, et $f(m_1, ..., m_N)$ est une fonction de $m_1, ..., m_N$ ;
l'appareil de stockage de segment $(100_n)$ comprenant :

une unité de déchiffrement $(110_n)$ adaptée pour utiliser le segment de clé secrète skn enregistré dans l'appareil de stockage de segment pour obtenir un segment de texte en clair $m_n$ donné par $m_n = \text{Dec}(C, sk_N)$ et envoyer le segment de texte en clair $m_n$ à un dispositif de combinaison ; et
une unité de changement de segment de clé secrète $(120_n)$ adaptée pour changer le segment de clé secrète $sk_n$ en $sk_n'$ de sorte qu'un ensemble de segments de clé secrète $(sk_1', ..., sk_N')$ satisfasse à

$$\text{Dec}(C, SK) = \text{Dec}(C, g(sk_1', ..., sk_N'))$$
$$= f(\text{Dec}(C, sk_1'), ..., \text{Dec}(C, sk_N'))$$

et diffère de $(sk_1, ..., sk_N)$,

**caractérisé en ce que** :

l'unité de changement de segment de clé secrète ($120_n$) est adaptée pour changer, périodiquement ou dans une condition prédéterminée, les segments de clé secrète skn en $sk_n'$ ;
la relation

$$C = \{C_1, C_2\} = \{rP, M \times e(P_{ID}, rQ)\}$$

$$M = Dec(C, S_{ID}) = C_2 \times e(S_{ID}, C_1)^{-1}$$

est satisfaite, où $\{P_{ID}, P, Q\}$ est la clé publique PK, $S_{ID}$ est la clé secrète SK et un entier supérieur ou égal à 1 et inférieur ou égal à q-1, $S_{ID} = sP_{ID}$, $Q = sP$, r est un nombre aléatoire et un entier supérieur ou égal à 0 et inférieur ou égal à q-1, $P_{ID}$ est un point sur une courbe elliptique d'ordre q transformé à partir d'ID en utilisant une fonction de hachage ; P est le générateur d'un sous-groupe sur la courbe elliptique ; s est la clé secrète maîtresse ; e(,) représente l'appariement sur la courbe elliptique, M est un texte en clair, C est le texte chiffré, et ^ est un symbole représentant une puissance ; et
les fonctions g et f sont définies comme :

$$g(sk_1, \ldots, sk_N) = sk_1 + \ldots + sk_N \bmod q$$

$$f(Dec(C, sk_1), \ldots, Dec(C, sk_N))$$
$$= Dec(C, sk_1) \times \ldots \times Dec(C, sk_N)/(C_2{}^{\wedge}(N-1)).$$

**6.** Appareil de stockage de segment ($200_n$) de N appareils de stockage de segment ($200_1, \ldots, 200_N$) qui enregistrent respectivement des segments de clé secrète $sk_1, \ldots, sk_N$ obtenus en segmentant une clé secrète SK correspondant à une clé publique PK, dans un système de stockage de clé secrète segmentée,
les relations

$$Dec(C, SK) = Dec(C, g(sk_1, \ldots, sk_N))$$

$$m_N = Dec(C, sk_N)$$

$$m_n = f(Dec(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, \ldots, sk_N)$ est une fonction de $sk_1, \ldots, sk_N$, et $f(Dec(C, sk_n), m_{n+1})$ est une fonction de Dec(C, skn) et $m_{n+1}$ ;
l'appareil de stockage de segment ($200_n$) comprenant :

une unité de déchiffrement ($210_n$) adaptée pour utiliser le segment de clé secrète $sk_N$ pour obtenir un segment de texte en clair $m_N$ donné par $m_N = Dec(C, sk_N)$ et envoyer le segment de texte en clair $m_N$ à l'appareil de stockage de segment qui enregistre le segment de clé secrète $sk_{N-1}$ lorsque le segment de clé secrète $sk_N$ est enregistré, utiliser un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par $M = f(Dec(C, sk_1), m_2)$ lorsque le segment de clé secrète $sk_1$ est enregistré, et utiliser un segment de texte en clair $m_{n+1}$ obtenu à partir de l'appareil de stockage de segment qui enregistre le segment de clé secrète $sk_{n+1}$ et le segment de clé secrète skn pour obtenir un segment de texte en clair $m_n$ donné par $m_n = f(Dec(C,$

$sk_n$), $m_{n+1}$) et envoyer le segment de texte en clair $m_n$ à l'appareil de stockage de segment qui enregistre le segment de clé secrète $sk_{n-1}$ lorsque N n'est pas inférieur à 3 et que le segment de clé secrète skn (n est 2 à N-1) est enregistré ; et

une unité de changement de segment de clé secrète ($120_n$) adaptée pour changer le segment de clé secrète skn en $sk_n'$ de sorte qu'un ensemble de segments de clé secrète ($sk_1'$, ..., $sk_N'$) satisfasse à

$$\mathtt{Dec(C,\ SK)\ =\ Dec(C,\ g(sk_1',\ \dots,\ sk_N'))}$$

$$\mathtt{m_N\ =\ Dec(C,\ sk_N')}$$

$$\mathtt{m_n\ =\ f(Dec(C,\ sk_n'),\ m_{n+1})}$$

$$\mathtt{M\ =\ m_1}$$

et diffère de ($sk_1$, ..., $sk_N$),
**caractérisé en ce que** :

l'unité de changement de segment de clé secrète ($120_n$) est adaptée pour changer, périodiquement ou dans une condition prédéterminée, les segments de clé secrète $sk_n$ en $sk_n'$ ;
la relation

$$\mathtt{C\ =\ \{C_1,\ C_2\}\ =\ \{rP,\ M\ \times\ e(P_{ID},\ rQ)\}}$$

$$\mathtt{M\ =\ Dec(C,\ S_{ID})\ =\ C_2\ \times\ e(S_{ID},\ C_1)^{-1}}$$

est satisfaite, où $\{P_{ID}, P, Q\}$ est la clé publique PK, $S_{ID}$ est la clé secrète SK et un entier supérieur ou égal à 1 et inférieur ou égal à q-1, $S_{ID} = sP_{ID}$, $Q = sP$, r est un nombre aléatoire et un entier supérieur ou égal à 0 et inférieur ou égal à q-1, $P_{ID}$ est un point sur une courbe elliptique d'ordre q transformé à partir d'ID en utilisant une fonction de hachage ; P est le générateur d'un sous-groupe sur la courbe elliptique ; s est la clé secrète maîtresse ; e(,) représente l'appariement sur la courbe elliptique, M est un texte en clair, et C est le texte chiffré ; et
les fonctions g et f sont définies comme :

$$\mathtt{g(sk_1,\ \dots,\ sk_N)\ =\ sk_1\ +\ \dots\ +\ sk_N\ mod\ q}$$

$$\mathtt{f(Dec(C,\ sk_n),\ m_{n+1})}$$
$$\mathtt{=\ (Dec(C,\ sk_n)\ \times\ m_{n+1})/C_2.}$$

**7.** Procédé de stockage de clé secrète segmentée utilisant :

N appareils de stockage de segment ($100_1$, ..., $100_N$) qui enregistrent respectivement des segments de clé secrète $sk_1$, ..., $sk_N$ obtenus en segmentant une clé secrète SK correspondant à une clé publique PK, et
un dispositif de combinaison (130) qui obtient un texte en clair M correspondant à un texte chiffré C ;
la relation

$$\mathtt{Dec(C,\ SK)\ =\ Dec(C,\ g(sk_1,\ \dots,\ sk_N))}$$
$$\mathtt{=\ f(Dec(C,\ sk_1),\ \dots,\ Dec(C,\ sk_N))}$$

étant satisfaite, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, ..., sk_N)$ est une fonction de $sk_1, ..., sk_N$, et $f(m_1, ..., m_N)$ est une fonction de $m_1, ..., m_N$ ;

le procédé de stockage de clé secrète segmentée comprenant :

une étape de déchiffrement ($S110_n$) dans laquelle chacun des appareils de stockage de segment utilise le segment de clé secrète skn enregistré dans l'appareil de stockage de segment ($100_n$) pour obtenir un segment de texte en clair $m_n$ donné par $m_n = Dec(C, sk_n)$ et envoie le segment de texte en clair $m_n$ au dispositif de combinaison ;

une étape de combinaison (S130) dans laquelle le dispositif de combinaison obtient le texte en clair M donné par $M = f(m_1, ..., m_N)$ ; et

une étape de changement de segment de clé secrète ($S121_n$, $S122_n$, S123, S124) dans laquelle l'appareil de stockage de segment obtient un ensemble de segments de clé secrète ($sk_1'$, ..., $sk_N'$) qui satisfait à

$$Dec(C, SK) = Dec(C, g(sk_1', ..., sk_N'))$$
$$= f(Dec(C, sk_1'), ..., Dec(C, sk_N'))$$

et qui diffère de ($sk_1$, ..., $sk_N$) et change le segment de clé secrète skn enregistré dans l'appareil de stockage de segment en $sk_n'$ ;

**caractérisé en ce que** :

l'étape de changement de segment de clé secrète obtient, périodiquement ou dans une condition prédéterminée, l'ensemble de segments de clé secrète ($sk_1'$, ..., $sk_N'$) ;

la relation

$$C = \{C_1, C_2\} = \{G^r, MH^r\}$$

$$M = Dec(C, x) = C_2/(C_1^x)$$

est satisfaite, où {G, H} est la clé publique PK, x est la clé secrète SK et un entier supérieur ou égal à 0 et inférieur ou égal à q-1, $H = G^x$, r est un nombre aléatoire et un entier supérieur ou égal à 0 et inférieur ou égal à q-1, q est l'ordre d'un groupe cyclique, G est le générateur du groupe cyclique, M est un texte en clair et un élément du groupe cyclique, C est le texte chiffré et un élément du groupe cyclique, et ^ est un symbole représentant une puissance ; et

les fonctions g et f sont définies comme :

$$g(sk_1, ..., sk_N) = sk_1 + ... + sk_N \bmod q$$

$$f(Dec(C, sk_1), ..., Dec(C, sk_N))$$
$$= Dec(C, sk_1) \times ... \times Dec(C, sk_N)/(C_2^{(N-1)}).$$

8. Procédé de stockage de clé secrète segmentée utilisant N appareils de stockage de segment ($200_1$, ..., $200_N$) qui enregistrent respectivement des segments de clé secrète $sk_1$, ..., $sk_N$ obtenus en segmentant une clé secrète SK correspondant à une clé publique PK,

les relations

$$Dec(C, SK) = Dec(C, g(sk_1, ..., sk_N))$$

$$m_N = Dec(C, sk_N)$$

$$m_n = f(Dec(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement d'un texte chiffré C avec la clé secrète SK, $g(sk_1, ..., sk_N)$ est une fonction de $sk_1, ..., sk_N$, et $f(Dec(C, sk_n), m_{n+1})$ est une fonction de $Dec(C, sk_n)$ et $m_{n+1}$ ;
le procédé de stockage de clé secrète segmentée comprenant :

une N-ième étape de déchiffrement ($S210_N$) dans laquelle l'appareil de stockage de segment ($200_N$) qui enregistre le segment de clé secrète $sk_N$ utilise le segment de clé secrète $sk_N$ pour obtenir un segment de texte en clair $m_N$ donné par $m_N = Dec(C, sk_N)$ et envoie le segment de texte en clair $m_N$ à l'appareil de stockage de segment qui enregistre le segment de clé secrète $sk_{N-1}$ ;
une n-ième étape de déchiffrement ($S210_n$) dans laquelle, si N n'est pas inférieur à 3, l'appareil de stockage de segment ($200_n$) qui enregistre le segment de clé secrète skn (n est 2 à N-1) utilise un segment de texte en clair $m_{n+1}$ obtenu à partir de l'appareil de stockage de segment qui enregistre le segment de clé secrète $sk_{n+1}$ et le segment de clé secrète skn pour obtenir un segment de texte en clair $m_n$ donné par $m_n = f(Dec(C, sk_n), m_{n+1})$ et envoie le segment de texte en clair $m_n$ à l'appareil de stockage de segment qui enregistre le segment de clé secrète $sk_{n-1}$ ;
une première étape de déchiffrement ($S210_1$) dans laquelle l'appareil de stockage de segment ($200_1$) qui enregistre le segment de clé secrète $sk_1$ utilise un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par $M = f(Dec(C, sk_1), m_2)$ ; et
une étape de changement de segment de clé secrète ($S121_n$, $S122_n$, S123, S124) dans laquelle chacun des appareils de stockage de segment obtient un ensemble de segments de clé secrète ($sk_1'$, ..., $sk_N'$) qui satisfait à

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

et qui diffère de ($sk_1, ..., sk_N$) et change le segment de clé secrète $sk_n$ enregistré dans l'appareil de stockage de segment en skn',
**caractérisé en ce que** :

l'étape de changement de segment de clé secrète obtient, périodiquement ou dans une condition prédéterminée, l'ensemble de segments de clé secrète ($sk_1'$, ..., $sk_N'$) ;
la relation

$$C = \{C_1, C_2\} = \{G\textasciicircum r, MH\textasciicircum r\}$$

$$M = Dec(C, x) = C_2/(C_1\textasciicircum x)$$

est satisfaite, où {G, H} est la clé publique PK, x est la clé secrète SK et un entier supérieur ou égal à 0 et inférieur ou égal à q-1, H = G^x, r est un nombre aléatoire et un entier supérieur ou égal à 0 et inférieur ou égal à q-1, q est l'ordre d'un groupe cyclique, G est le générateur du groupe cyclique, M est un texte en clair et un élément du groupe cyclique, C est le texte chiffré et un élément du groupe cyclique, et ^ est un symbole représentant une puissance ; et
les fonctions g et f sont définies comme :

$$g(sk_1, \ldots, sk_N) = sk_1 + \ldots + sk_N \bmod q$$

$$f(Dec(C, sk_n), m_{n+1})$$
$$= (Dec(C, sk_n) \times m_{n+1})/C_2.$$

9. Procédé de stockage de clé secrète segmentée utilisant :

N appareils de stockage de segment $(100_1, \ldots, 100_N)$ qui enregistrent respectivement des segments de clé secrète $sk_1, \ldots, sk_N$ obtenus en segmentant une clé secrète SK correspondant à une clé publique PK, et un dispositif de combinaison (130) qui obtient un texte en clair M correspondant à un texte chiffré C ;
la relation

$$Dec(C, SK) = Dec(C, g(sk_1, \ldots, sk_N))$$
$$= f(Dec(C, sk_1), \ldots, Dec(C, sk_N))$$

étant satisfaite, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, \ldots, sk_N)$ est une fonction de $sk_1, \ldots, sk_N$, et $f(m_1, \ldots, m_N)$ est une fonction de $m_1, \ldots, m_N$ ;
le procédé de stockage de clé secrète segmentée comprenant :

une étape de déchiffrement $(S110_n)$ dans laquelle chacun des appareils de stockage de segment utilise le segment de clé secrète skn enregistré dans l'appareil de stockage de segment $(100_n)$ pour obtenir un segment de texte en clair $m_n$ donné par $m_n = Dec(C, skn)$ et envoie le segment de texte en clair $m_n$ au dispositif de combinaison ;
une étape de combinaison (S130) dans laquelle le dispositif de combinaison obtient le texte en clair M donné par $M = f(m_1, \ldots, m_N)$ ; et
une étape de changement de segment de clé secrète $(S121_n, S122_n, S123, S124)$ dans laquelle l'appareil de stockage de segment obtient un ensemble de segments de clé secrète $(sk_1', \ldots, sk_N')$ qui satisfait à

$$Dec(C, SK) = Dec(C, g(sk_1', \ldots, sk_N'))$$
$$= f(Dec(C, sk_1'), \ldots, Dec(C, sk_N'))$$

et qui diffère de $(sk_1, \ldots, sk_N)$ et change le segment de clé secrète $sk_n$ enregistré dans l'appareil de stockage de segment en skn',
**caractérisé en ce que** :

l'étape de changement de segment de clé secrète obtient, périodiquement ou dans une condition prédéterminée, l'ensemble de segments de clé secrète $(sk_1', \ldots, sk_N')$ ;
la relation

$$C = \{C_1, C_2\} = \{rG, M + rH\}$$

$$M = Dec(C, x) = C_2 - xC_1$$

est satisfaite, où {G, H} est la clé publique PK, x est la clé secrète SK et un entier supérieur ou égal à 1 et inférieur ou égal à q-1, H = xG, r est un nombre aléatoire et un entier supérieur ou égal à 0 et inférieur ou égal à q-1, q est l'ordre d'un point de base G sur la courbe elliptique, M est un texte en clair, et C est le texte chiffré ; et
les fonctions g et f sont définies comme :

$$g(sk_1, \ldots, sk_N) = sk_1 + \ldots + sk_N \bmod q$$

$$f(\mathrm{Dec}(C, sk_1), \ldots, \mathrm{Dec}(C, sk_N))$$
$$= \mathrm{Dec}(C, sk_1) + \ldots + \mathrm{Dec}(C, sk_N) - (N-1)C_2.$$

10. Procédé de stockage de clé secrète segmentée utilisant N appareils de stockage de segment ($200_1$, ..., $200_N$) qui enregistrent respectivement des segments de clé secrète $sk_1$, ..., $sk_N$ obtenus en segmentant une clé secrète SK correspondant à une clé publique PK,
les relations

$$\mathrm{Dec}(C, SK) = \mathrm{Dec}(C, g(sk_1, \ldots, sk_N))$$

$$m_N = \mathrm{Dec}(C, sk_N)$$

$$m_n = f(\mathrm{Dec}(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement d'un texte chiffré C avec la clé secrète SK, $g(sk_1, \ldots, sk_N)$ est une fonction de $sk_1$, ..., $sk_N$, et $f(\mathrm{Dec}(C, sk_n), m_{n+1})$ est une fonction de $\mathrm{Dec}(C, sk_n)$ et $m_{n+1}$ ;
le procédé de stockage de clé secrète segmentée comprenant :

une N-ième étape de déchiffrement ($S210_N$) dans laquelle l'appareil de stockage de segment ($200_N$) qui enregistre le segment de clé secrète $sk_N$ utilise le segment de clé secrète $sk_N$ pour obtenir un segment de texte en clair $m_N$ donné par $m_N = \mathrm{Dec}(C, sk_N)$ et envoie le segment de texte en clair $m_N$ à l'appareil de stockage de segment qui enregistre le segment de clé secrète $sk_{N-1}$ ;
une n-ième étape de déchiffrement ($S210_n$) dans laquelle, si N n'est pas inférieur à 3, l'appareil de stockage de segment ($200_n$) qui enregistre le segment de clé secrète skn (n est 2 à N-1) utilise un segment de texte en clair $m_{n+1}$ obtenu à partir de l'appareil de stockage de segment qui enregistre le segment de clé secrète $sk_{n+1}$ et le segment de clé secrète $sk_n$ pour obtenir un segment de texte en clair $m_n$ donné par $m_n = f(\mathrm{Dec}(C, sk_n), m_{n+1})$ et envoie le segment de texte en clair $m_n$ à l'appareil de stockage de segment qui enregistre le segment de clé secrète $sk_{n-1}$ ;
une première étape de déchiffrement ($S210_1$) dans laquelle l'appareil de stockage de segment ($200_1$) qui enregistre le segment de clé secrète $sk_1$ utilise un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par $M = f(\mathrm{Dec}(C, sk_1), m_2)$ ; et
une étape de changement de segment de clé secrète ($S121_n$, $S122_n$, S123, S124) dans laquelle chacun des appareils de stockage de segment obtient un ensemble de segments de clé secrète ($sk_1'$, ..., $sk_N'$) qui satisfait à

$$\mathrm{Dec}(C, SK) = \mathrm{Dec}(C, g(sk_1', \ldots, sk_N'))$$

$$m_N = \mathrm{Dec}(C, sk_N')$$

$$m_n = f(\mathrm{Dec}(C, sk_n'), m_{n+1})$$

$$M = m_1$$

et qui diffère de $(sk_1, ..., sk_N)$ et change le segment de clé secrète $sk_n$ enregistré dans l'appareil de stockage de segment en $sk_n'$,
**caractérisé en ce que** :

l'étape de changement de segment de clé secrète obtient, périodiquement ou dans une condition prédéterminée, l'ensemble de segments de clé secrète $(sk_1', ..., sk_N')$ ;
la relation

$$C = \{C_1, C_2\} = \{rG, M + rH\}$$

$$M = Dec(C, x) = C_2 - xC_1$$

est satisfaite, où $\{G, H\}$ est la clé publique PK, $x$ est la clé secrète SK et un entier supérieur ou égal à 1 et inférieur ou égal à $q-1$, $H = xG$, $r$ est un nombre aléatoire et un entier supérieur ou égal à 0 et inférieur ou égal à $q-1$, $q$ est l'ordre d'un point de base G sur la courbe elliptique, M est un texte en clair, et C est le texte chiffré ; et
les fonctions g et f sont définies comme :

$$g(sk_1, ..., sk_N) = sk_1 + ... + sk_N \bmod q$$

$$f(Dec(C, sk_n), m_{n+1})$$
$$= Dec(C, sk_n) + m_{n+1} - C_2.$$

**11.** Procédé de stockage de clé secrète segmentée utilisant :

N appareils de stockage de segment $(100_1, ..., 100_N)$ qui enregistrent respectivement des segments de clé secrète $sk_1, ..., sk_N$ obtenus en segmentant une clé secrète SK correspondant à une clé publique PK, et
un dispositif de combinaison (130) qui obtient un texte en clair M correspondant à un texte chiffré C ;
la relation

$$Dec(C, SK) = Dec(C, g(sk_1, ..., sk_N))$$
$$= f(Dec(C, sk_1), ..., Dec(C, sk_N))$$

étant satisfaite, où N est un entier non inférieur à 2, n est un entier supérieur ou égal à 1 et inférieur ou égal à N, Dec(C, SK) est un symbole représentant le déchiffrement du texte chiffré C avec la clé secrète SK, $g(sk_1, ..., sk_N)$ est une fonction de $sk_1, ..., sk_N$, et $f(m_1, ..., m_N)$ est une fonction de $m_1, ..., m_N$ ;
le procédé de stockage de clé secrète segmentée comprenant :

une étape de déchiffrement $(S110_n)$ dans laquelle chacun des appareils de stockage de segment utilise le segment de clé secrète $sk_n$ enregistré dans l'appareil de stockage de segment $(100_n)$ pour obtenir un segment de texte en clair $m_n$ donné par $m_n = Dec(C, skn)$ et envoie le segment de texte en clair $m_n$ au dispositif de combinaison ;
une étape de combinaison (S130) dans laquelle le dispositif de combinaison obtient le texte en clair M donné par $M = f(m_1, ..., m_N)$ ; et
une étape de changement de segment de clé secrète $(S121_n, S122_n, S123, S124)$ dans laquelle l'appareil de stockage de segment obtient un ensemble de segments de clé secrète $(sk_1', ..., sk_N')$ qui satisfait à

$$Dec(C, SK) = Dec(C, g(sk_1', …, sk_N'))$$
$$= f(Dec(C, sk_1'), …, Dec(C, sk_N'))$$

et qui diffère de $(sk_1, …, sk_N)$ et change le segment de clé secrète $sk_n$ enregistré dans l'appareil de stockage de segment en $sk_n$',
**caractérisé en ce que** :

l'étape de changement de segment de clé secrète obtient, périodiquement ou dans une condition prédéterminée, l'ensemble de segments de clé secrète $(sk_1', …, sk_N')$ ;
la relation

$$C = \{C_1, C_2\} = \{rP, M \times e(P_{ID}, rQ)\}$$

$$M = Dec(C, S_{ID}) = C_2 \times e(S_{ID}, C_1)^{-1}$$

est satisfaite, où $\{P_{ID}, P, Q\}$ est la clé publique PK, $S_{ID}$ est la clé secrète SK et un entier supérieur ou égal à 1 et inférieur ou égal à q-1, $S_{ID} = sP_{ID}$, $Q = sP$, r est un nombre aléatoire et un entier supérieur ou égal à 0 et inférieur ou égal à q-1, $P_{ID}$ est un point sur une courbe elliptique d'ordre q transformé à partir d'ID en utilisant une fonction de hachage ; P est le générateur d'un sous-groupe sur la courbe elliptique ; s est la clé secrète maîtresse ; e(,) représente l'appariement sur la courbe elliptique, M est un texte en clair, C est le texte chiffré, et ^ est un symbole représentant une puissance ; et
les fonctions g et f sont définies comme :

$$g(sk_1, …, sk_N) = sk_1 + … + sk_N \bmod q$$

$$f(Dec(C, sk_1), …, Dec(C, sk_N))$$
$$= Dec(C, sk_1) \times … \times Dec(C, sk_N)/(C_2\text{^}(N-1)).$$

12. Procédé de stockage de clé secrète segmentée utilisant N appareils de stockage de segment $(200_1, …, 200_N)$ qui enregistrent respectivement des segments de clé secrète $sk_1, …, sk_N$ obtenus en segmentant une clé secrète SK correspondant à une clé publique PK,
les relations

$$Dec(C, SK) = Dec(C, g(sk_1, …, sk_N))$$

$$m_N = Dec(C, sk_N)$$

$$m_n = f(Dec(C, sk_n), m_{n+1})$$

$$M = m_1$$

étant satisfaites, où N est un entier non inférieur à 2, n est un entier supérieur ou égal à 1 et inférieur ou égal à N, Dec(C, SK) est un symbole représentant le déchiffrement d'un texte chiffré C avec la clé secrète SK, $g(sk_1, …, sk_N)$ est une fonction de $sk_1, …, sk_N$, et $f(Dec(C, sk_n), m_{n+1})$ est une fonction de $Dec(C, sk_n)$ et $m_{n+1}$ ;
le procédé de stockage de clé secrète segmentée comprenant :

une N-ième étape de déchiffrement $(S210_N)$ dans laquelle l'appareil de stockage de segment $(200_N)$ qui enregistre le segment de clé secrète $sk_N$ utilise le segment de clé secrète $sk_N$ pour obtenir un segment de texte en clair $m_N$ donné par $m_N = Dec(C, sk_N)$ et envoie le segment de texte en clair $m_N$ à l'appareil de stockage de segment qui enregistre le segment de clé secrète $sk_{N-1}$ ;

une n-ième étape de déchiffrement ($S210_n$) dans laquelle, si N n'est pas inférieur à 3, l'appareil de stockage de segment ($200_n$) qui enregistre le segment de clé secrète skn (n est 2 à N-1) utilise un segment de texte en clair $m_{n+1}$ obtenu à partir de l'appareil de stockage de segment qui enregistre le segment de clé secrète $sk_{n+1}$ et le segment de clé secrète skn pour obtenir un segment de texte en clair $m_n$ donné par $m_n = f(Dec(C, sk_n), m_{n+1})$ et envoie le segment de texte en clair $m_n$ à l'appareil de stockage de segment qui enregistre le segment de clé secrète $sk_{n-1}$ ;

une première étape de déchiffrement ($S210_1$) dans laquelle l'appareil de stockage de segment ($200_1$) qui enregistre le segment de clé secrète $sk_1$ utilise un segment de texte en clair $m_2$ obtenu à partir de l'appareil de stockage de segment qui enregistre le segment de clé secrète $sk_2$ et le segment de clé secrète $sk_1$ pour obtenir un texte en clair M donné par $M = f(Dec(C, sk_1), m_2)$ ; et

une étape de changement de segment de clé secrète ($S121_n$, $S122_n$, S123, S124) dans laquelle chacun des appareils de stockage de segment obtient un ensemble de segments de clé secrète ($sk_1'$, ..., $sk_N'$) qui satisfait à

$$Dec(C, SK) = Dec(C, g(sk_1', ..., sk_N'))$$

$$m_N = Dec(C, sk_N')$$

$$m_n = f(Dec(C, sk_n'), m_{n+1})$$

$$M = m_1$$

et qui diffère de ($sk_1$, ..., $sk_N$) et change le segment de clé secrète skn enregistré dans l'appareil de stockage de segment en skn',

**caractérisé en ce que** :

l'étape de changement de segment de clé secrète obtient, périodiquement ou dans une condition prédéterminée, l'ensemble de segments de clé secrète ($sk_1'$, ..., $sk_N'$) ;

la relation

$$C = \{C_1, C_2\} = \{rP, M \times e(P_{ID}, rQ)\}$$

$$M = Dec(C, S_{ID}) = C_2 \times e(S_{ID}, C_1)^{-1}$$

est satisfaite, où $\{P_{ID}, P, Q\}$ est la clé publique PK, $S_{ID}$ est la clé secrète SK et un entier supérieur ou égal à 1 et inférieur ou égal à q-1, $S_{ID} = sP_{ID}$, $Q = sP$, r est un nombre aléatoire et un entier supérieur ou égal à 0 et inférieur ou égal à q-1, $P_{ID}$ est un point sur une courbe elliptique d'ordre q transformé à partir d'ID en utilisant une fonction de hachage ; P est le générateur d'un sous-groupe sur la courbe elliptique ; s est la clé secrète maîtresse ; e(,) représente l'appariement sur la courbe elliptique, M est un texte en clair, et C est le texte chiffré ; et

les fonctions g et f sont définies comme :

$$g(sk_1, ..., sk_N) = sk_1 + ... + sk_N \bmod q$$

$$f(Dec(C, sk_n), m_{n+1})$$
$$= Dec(C, sk_n) \times m_{n+1}/C_2.$$

SEGMENT STORAGE
APPARATUS 100₁

| 110₁
DECRYPTION UNIT

| 120₁
SECRET-KEY SEGMENT
CHANGING UNIT

| 190₁
RECORDING UNIT

| 130
COMBINING DEVICE

SEGMENT STORAGE
APPARATUS 100₂

| 110₂
DECRYPTION UNIT

| 120₂
SECRET-KEY SEGMENT
CHANGING UNIT

| 190₂
RECORDING UNIT

| 130
COMBINING DEVICE

SEGMENT STORAGE
APPARATUS 100ₙ

| 110ₙ
DECRYPTION UNIT

| 120ₙ
SECRET-KEY SEGMENT
CHANGING UNIT

| 190ₙ
RECORDING UNIT

| 130
COMBINING DEVICE

• • •

NETWORK | 900

ENCRYPTION
APPARATUS | 600

COMBINING
DEVICE | 130

FIG. 1

SEGMENT
STORAGE
APPARATUS
100₁

| S110₁
SEGMENT
DECRYPTION

SEGMENT
STORAGE
APPARATUS
100₂

| S110₂
SEGMENT
DECRYPTION

• • •

SEGMENT
STORAGE
APPARATUS
100ₙ

| S110ₙ
SEGMENT
DECRYPTION

• • •

COMBINING
DEVICE 130

| S130
OBTAIN
PLAINTEXT M

FIG. 2

| SEGMENT STORAGE APPARATUS $100_1$ $(200_1)$ $(300_1)$ $(400_1)$ | ••• | SEGMENT STORAGE APPARATUS $100_i$ $(200_i)$ $(300_i)$ $(400_i)$ | ••• | SEGMENT STORAGE APPARATUS $100_j$ $(200_j)$ $(300_j)$ $(400_j)$ | ••• | SEGMENT STORAGE APPARATUS $100_N$ $(200_N)$ $(300_N)$ $(400_N)$ |
|---|---|---|---|---|---|---|

~S121

| RECORD SAME INFORMATION |
|---|

| ~$S122_1$ CHANGE SECRET-KEY SEGMENT | ••• | ~$S122_i$ CHANGE SECRET-KEY SEGMENT | ••• | ~$S122_j$ CHANGE SECRET-KEY SEGMENT | ••• | ~$S122_N$ CHANGE SECRET-KEY SEGMENT |
|---|---|---|---|---|---|---|

FIG. 3

| SEGMENT STORAGE APPARATUS $100_1$ $(200_1)$ $(300_1)$ $(400_1)$ | ••• | SEGMENT STORAGE APPARATUS $100_i$ $(200_i)$ $(300_i)$ $(400_i)$ | ••• | SEGMENT STORAGE APPARATUS $100_j$ $(200_j)$ $(300_j)$ $(400_j)$ | ••• | SEGMENT STORAGE APPARATUS $100_N$ $(200_N)$ $(300_N)$ $(400_N)$ |
|---|---|---|---|---|---|---|

~S123

| SELECT SEGMENT STORAGE APPARATUSES |
|---|

~$S121_{ij}$

| RECORD SAME INFORMATION | ↔ | RECORD SAME INFORMATION |
|---|---|---|

~$S122_{ij}$

| CHANGE SECRET-KEY SEGMENT | | CHANGE SECRET-KEY SEGMENT |
|---|---|---|

Yes

| IS PROCESS REPEATED? |
|---|

~S124

No    No    No    No

FIG. 4

FIG. 5

SEGMENT STORAGE
APPARATUS  200₁

SEGMENT STORAGE
APPARATUS  200₂

SEGMENT STORAGE
APPARATUS  200ₙ

210₁
DECRYPTION UNIT

210₂
DECRYPTION UNIT

210ₙ
DECRYPTION UNIT

120₁
SECRET-KEY SEGMENT
CHANGING UNIT

120₂
SECRET-KEY SEGMENT
CHANGING UNIT

120ₙ
SECRET-KEY SEGMENT
CHANGING UNIT

• • • •

190₁
RECORDING UNIT

190₂
RECORDING UNIT

190ₙ
RECORDING UNIT

900
NETWORK

600
ENCRYPTION
APPARATUS

FIG. 6

SEGMENT
STORAGE
APPARATUS
200₁

• • •

SEGMENT
STORAGE
APPARATUS
200ₙ

• • •

SEGMENT
STORAGE
APPARATUS
200ₙ

S210ₙ
SEGMENT
DECRYPTION

S210ₙ
SEGMENT
DECRYPTION

S210₁
SEGMENT
DECRYPTION

FIG. 7

SEGMENT STORAGE APPARATUS 300₁

- 310₁ GENERATION UNIT
- 120₁ SECRET-KEY SEGMENT CHANGING UNIT
- 190₁ RECORDING UNIT
- 330 COMBINING DEVICE

SEGMENT STORAGE APPARATUS 300₂

- 310₂ GENERATION UNIT
- 120₂ SECRET-KEY SEGMENT CHANGING UNIT
- 190₂ RECORDING UNIT
- 330 COMBINING DEVICE

• • •

SEGMENT STORAGE APPARATUS 300ₙ

- 310ₙ GENERATION UNIT
- 120ₙ SECRET-KEY SEGMENT CHANGING UNIT
- 190ₙ RECORDING UNIT
- 330 COMBINING DEVICE

900 — NETWORK

700 — SIGNATURE VERIFICATION APPARATUS

330 — COMBINING DEVICE

FIG. 8

SEGMENT STORAGE APPARATUS 300₁

S310₁ GENERATE SIGNATURE SEGMENT

SEGMENT STORAGE APPARATUS 300₂

S310₂ GENERATE SIGNATURE SEGMENT

• • •

SEGMENT STORAGE APPARATUS 300ₙ

S310ₙ GENERATE SIGNATURE SEGMENT

COMBINING DEVICE 330

S330 OBTAIN SIGNATURE Σ

FIG. 9

SEGMENT STORAGE APPARATUS 400₁

410₁
GENERATION UNIT

120₁
SECRET-KEY SEGMENT CHANGING UNIT

190₁
RECORDING UNIT

SEGMENT STORAGE APPARATUS 400₂

410₂
GENERATION UNIT

120₂
SECRET-KEY SEGMENT CHANGING UNIT

190₂
RECORDING UNIT

SEGMENT STORAGE APPARATUS 400ₙ

410ₙ
GENERATION UNIT

120ₙ
SECRET-KEY SEGMENT CHANGING UNIT

190ₙ
RECORDING UNIT

• • • •

NETWORK  900

700
SIGNATURE VERIFICATION APPARATUS

FIG. 10

SEGMENT STORAGE APPARATUS 400₁

• • •

SEGMENT STORAGE APPARATUS 400ₙ

• • •

SEGMENT STORAGE APPARATUS 400ₙ

S410ₙ
GENERATE SIGNATURE SEGMENT

S410ₙ
GENERATE SIGNATURE SEGMENT

S410₁
GENERATE SIGNATURE SEGMENT

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012150287 A
- US 2012163590 A
- JP 2004048479 A
- JP 2001166687 A
- JP 2006352254 A
- JP 2002091301 A